(19)

Europäisches
Patentamt
European
Patent Office
Office européen
des brevets

(11)  **EP 4 270 253 A1**

(12)  **EUROPEAN PATENT APPLICATION**
published in accordance with Art. 153(4) EPC

(43) Date of publication:
**01.11.2023 Bulletin 2023/44**

(21) Application number: **21911297.6**

(22) Date of filing: **01.12.2021**

(51) International Patent Classification (IPC):
*G06N 3/08* (2023.01)          *G06N 3/04* (2023.01)
*G06N 5/04* (2023.01)          *G06N 5/02* (2023.01)
*H04W 72/04* (2023.01)

(52) Cooperative Patent Classification (CPC):
**G06N 3/04; G06N 3/08; G06N 5/02; G06N 5/04;
H04W 72/04**

(86) International application number:
**PCT/KR2021/017979**

(87) International publication number:
**WO 2022/139230 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.12.2020 KR 20200183638**

(71) Applicant: **LG Electronics Inc.**
**Yeongdeungpo-gu**
**Seoul 07336 (KR)**

(72) Inventors:
• **JUNG, Ikjoo**
  **Seoul 06772 (KR)**
• **LEE, Sangrim**
  **Seoul 06772 (KR)**
• **LEE, Kyung Ho**
  **Seoul 06772 (KR)**
• **KIM, Jayeong**
  **Seoul 06772 (KR)**
• **LEE, Tae Hyun**
  **Seoul 06772 (KR)**

(74) Representative: **Plasseraud IP**
**66, rue de la Chaussée d'Antin**
**75440 Paris Cedex 09 (FR)**

(54) **METHOD AND DEVICE FOR ADJUSTING SPLIT POINT IN WIRELESS COMMUNICATION SYSTEM**

(57)      Disclosed herein is a method of operating a terminal in a wireless communication system. As an example of the present disclosure, the method may include: receiving information on at least one of a first split point and a second split point from a base station; performing first split inference based on the first split point and generating first intermediate data; transmitting the first intermediate data to the base station; receiving second intermediate data generated based on the second split point from the base station; performing remaining split inference from the second split point based on the second intermediate data; and adjusting the second split point based on the second intermediate data.

FIG. 15

## Description

### Technical Field

The present disclosure relates to a device and method for adjusting a split point based on AoI in a wireless communication system. Particularly, the present disclosure relates to a device and method for determining a split point in a system performing split inference through a U-shaped split artificial intelligence/machine learning (AI/ML) model.

### Background Art

Radio access systems have come into widespread in order to provide various types of communication services such as voice or data. In general, a radio access system is a multiple access system capable of supporting communication with multiple users by sharing available system resources (bandwidth, transmit power, etc.). Examples of the multiple access system include a code division multiple access (CDMA) system, a frequency division multiple access (FDMA) system, a time division multiple access (TDMA) system, a single carrier-frequency division multiple access (SC-FDMA) system, etc.

In particular, as many communication apparatuses require a large communication capacity, an enhanced mobile broadband (eMBB) communication technology has been proposed compared to radio access technology (RAT). In addition, not only massive machine type communications (MTC) for providing various services anytime anywhere by connecting a plurality of apparatuses and things but also communication systems considering services/user equipments (UEs) sensitive to reliability and latency have been proposed. To this end, various technical configurations have been proposed.

### Disclosure

### Technical Problem

The present disclosure may provide a device and method for adjusting a split point in a wireless communication system.

The present disclosure may provide a device and method for determining a split point by considering an age of information (AoI) of data in a wireless communication system.

The present disclosure may provide a device and method in which a system performing split inference maintains up-to-dateness of information by considering AoI of data in a wireless communication system.

The present disclosure may provide a device and method for performing communication by reflecting a real-time environment of performing split inference by adjusting a split point in consideration of AoI of data in a wireless communication system.

The technical objects to be achieved in the present disclosure are not limited to the above-mentioned technical objects, and other technical objects that are not mentioned may be considered by those skilled in the art through the embodiments described below.

### Technical Solution

The present disclosure may provide a method of operating a terminal in a wireless communication system. As an example of the present disclosure, the method may include: receiving information on at least one of a first split point and a second split point from a base station; performing first split inference based on the first split point and generating first intermediate data; transmitting the first intermediate data to the base station; receiving second intermediate data generated based on the second split point from the base station; performing remaining split inference from the second split point based on the second intermediate data; and adjusting the second split point based on the second intermediate data.

As an example of the present disclosure, the first split point may indicate a first point where the terminal performs the first split inference based on a U-shaped split artificial intelligence (AI) learning model, and the second split point may indicate a second point where the base station performs second split inference based on the U-shaped split AI learning model.

As an example of the present disclosure, the terminal may transmit, to the base station, information on a time when raw data of the terminal is delivered to an input layer and information on the second split point together with the first intermediate data and may receive information on a reception time of the first intermediate data, which the base station receives, and information on the first split point together with the second intermediate data.

As an example of the present disclosure, the adjusting of the second split point by the terminal may include measuring a peak of AoI (PAoI) of the second intermediate data and adjusting the second split point based on a comparison result between a measured PAoI value and a first threshold configured by the base station.

As an example of the present disclosure, in case that the PAoI value is greater than the first threshold, the second split point may be moved toward the input layer or be maintained, and in case that the PAoI value is smaller than the first threshold, the second split point may be moved toward output layer or be maintained.

As an example of the present disclosure, an adjustment position of the second split point may be determined between after the first split point and before the output layer.

As an example of the present disclosure, the first split point may be moved toward the output layer or is maintained in case that the base station measuring a PAoI of the first intermediate data received from the terminal and a value of the measured PAoI of the first intermediate data is smaller than a second threshold configured by the base station, and the first split point may be moved toward the input layer or is maintained in case that the value of the measured PAoI of the first intermediate data being greater than the second threshold.

As an example of the present disclosure, an adjustment position of the first split point may be determined between after the input layer and before the second split point.

As an example of the present disclosure, a method of operating a base station in a wireless communication system may include: performing initial configuration for a first split point and a second split point; transmitting information on at least one of the first split point and the second split point to a terminal; receiving first intermediate data from the terminal, wherein the first intermediate data is generated based on first split inference that the terminal performs based on the first split point; generating second intermediate data by performing second split inference up to the second split point based on the first intermediate data; adjusting the first split point based on the first intermediate data; and transmitting information on the generated second intermediate data and the adjusted first split point to the terminal.

As an example of the present disclosure, a terminal in a wireless communication system may include: a transceiver; and a processor coupled to the transceiver, and the processor may be configured to: receive information on at least one of a first split point and a second split point from a base station, perform first split inference based on the first split point, generate first intermediate data, transmit the first intermediate data to the base station, receive second intermediate data generated based on the second split point from the base station, perform remaining split inference from the second split point based on the second intermediate data, and adjust the second split point based on the second intermediate data.

As an example of the present disclosure, a base station in a wireless communication system may include: a transceiver; and a processor coupled to the transceiver, and the processor may be configured to: perform initial configuration for a first split point and a second split point, transmit information on at least one of the first split point and the second split point to a terminal, receive first intermediate data from the terminal, wherein the first intermediate data is generated based on first split inference that the terminal performs based on the first split point, generate second intermediate data by performing second split inference up to the second split point based on the first intermediate data, adjust the first split point based on the first intermediate data, and transmit information on the generated second intermediate data and the adjusted first split point to the terminal.

As an example of the present disclosure, an operating method in a wireless communication system may include: performing, by a base station, initial configuration for a first split point and a second split point; transmitting, by the base station, information on at least one of the first split point and the second split point to a terminal; performing, by the terminal, first split inference based on the first split point and generating first intermediate data; transmitting, by the terminal, at least one of the first intermediate data and information on an adjusted second split point to the base station; generating, by the bases station, second intermediate data by performing second split inference up to the second split point based on at least one of the first intermediate data and the information on the adjusted second split point which are received from the terminal; adjusting, by the base station, the first split point based on the first intermediate data received from the terminal; transmitting, by the base station, information on the generated second intermediate data and the adjusted first split point to the terminal: performing, by the terminal, remaining split inference from the second split point based on the second intermediate data received from the base station; and adjusting, by the terminal, the second split point based on the second intermediate data. As an example, a communication device may include: at least one processor; and at least one computer memory coupled to the at least one processor and storing an instruction instructing operations when executed by the at least one processor, and the operations may be configured to: receive information on at least one of a first split point and a second split point from a base station, perform first split inference based on the first split point, generate first intermediate data, transmit the first intermediate data to the base station, receive, from the base station, information on second intermediate data generated based on the second split point and the first split point adjusted by the base station, perform remaining split inference from the second split point based on the second intermediate data, and adjust the second split point based on the second intermediate data.

As an example of the present disclosure, a non-transitory computer-readable medium storing at least one instruction comprising the at least one instruction executable by a processor, and the at least one instruction may instruct a device to: receive information on at least one of a first split point and a second split point from a base station, perform first split inference based on the first split point, generate first intermediate data, transmit the first intermediate data to the base station, receive, from the base station, second intermediate data generated based on the second split point, perform remaining split inference from the second split point based on the second intermediate data, and adjust the second split point based on the second intermediate data.

The above-described aspects of the present disclosure are merely some of the preferred embodiments of the present disclosure, and various embodiments reflecting the technical features of the present disclosure may be derived and understood by those of ordinary skill in the art based on the following detailed description of the disclosure.

**Advantageous Effects**

As is apparent from the above description, the embodiments of the present disclosure have the following effects.

According to the present disclosure, a split point may be adjusted based on an age of information (AoI) of data in a wireless communication system.

According to the present disclosure, up-to-dateness of data may be maintained by adjusting a split point based on an AoI of data in a wireless communication system.

According to the present disclosure, a real-time environment for performing split inference may be reflected by adjusting a split point based on an AoI of data in a wireless communication system.

According to the present disclosure, distortion and/or error of an inference result may be reduced by adjusting a split point based on an AoI of data in a wireless communication system.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

**Description of Drawings**

The accompanying drawings are provided to help understanding of the present disclosure, and may provide embodiments of the present disclosure together with a detailed description. However, the technical features of the present disclosure are not limited to specific drawings, and the features disclosed in each drawing may be combined with each other to constitute a new embodiment. Reference numerals in each drawing may refer to structural elements.

FIG. 1 is a view showing an example of a communication system applicable to the present disclosure.
FIG. 2 is a view showing an example of a wireless apparatus applicable to the present disclosure.
FIG. 3 is a view showing another example of a wireless device applicable to the present disclosure.
FIG. 4 is a view showing an example of a hand-held device applicable to the present disclosure.
FIG. 5 is a view showing an example of a car or an autonomous driving car applicable to the present disclosure.
FIG. 6 is a diagram illustrating an example of an AI device applied to the present disclosure.
FIG. 7 is a diagram illustrating a method of processing a transmitted signal applied to the present disclosure.
FIG. 8 illustrates a structure of a perceptron included in an artificial neural network applicable to the present disclosure.
FIG. 9 illustrates an example of a system of implementing a split AI/ML model, in accordance with an embodiment of the present disclosure.
FIG. 10 illustrates an example of an operation for determining a split point of a split engine in accordance with an embodiment of the present disclosure.
FIG. 11 illustrates an example of measuring an age of information (AoI) in accordance with an embodiment of the present disclosure.
FIG. 12 illustrates an example of measuring an AoI by using a cost of update delay (CoUD) metric in accordance with an embodiment of the present disclosure.
FIG. 13 illustrates an example of a graph showing communication performance evaluation for a device according to a candidate split point configuration of a VGG-16 model in accordance with an embodiment of the present disclosure.
FIG. 14 illustrates an example of a system supporting a U-shaped split AI/ML model in accordance with an embodiment of the present disclosure.
FIG. 15 illustrates an example of an operation of adjusting a split point in a U-shaped AI/ML split model in accordance with an embodiment of the present disclosure.
FIG. 16 illustrates an example of an operation of adjusting a first split point by a base station in a U-shaped split AI/ML model in accordance with an embodiment of the present disclosure.
FIG. 17 illustrates an example of an operation of adjusting a second split point by a device in a U-shaped split AI/ML model in accordance with an embodiment of the present disclosure.

FIG. 18 exemplifies an operation of adjusting a first split point by a base station in a system where a U-shaped split AI/ML model is applied in accordance with an embodiment of the present disclosure.

FIG. 19 exemplifies an operation of delivering by a device information for adjusting a split point to a base station in a system where a U-shaped split AI/ML model is applied in accordance with an embodiment of the present disclosure.

FIG. 20 exemplifies an operation of adjusting a second split point by a device in a system where a U-shaped split AI/ML model is applied in accordance with an embodiment of the present disclosure.

FIG. 21 exemplifies an operation of adjusting a split point by a device in a system where a U-shaped split AI/ML model is applied in accordance with an embodiment of the present disclosure.

## Mode for Invention

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

For background arts, terms, abbreviations, etc. used in the present disclosure, refer to matters described in the standard documents published prior to the present disclosure. For example, reference may be made to the standard documents 36.xxx and 38.xxx.

Communication system applicable to the present disclosure

Without being limited thereto, various descriptions, functions, procedures, proposals, methods and/or operational flowcharts of the present disclosure disclosed herein are applicable to various fields requiring wireless communication/connection (e.g., 5G).

Hereinafter, a more detailed description will be given with reference to the drawings. In the following drawings/description, the same reference numerals may exemplify the same or corresponding hardware blocks, software blocks or functional blocks unless indicated otherwise.

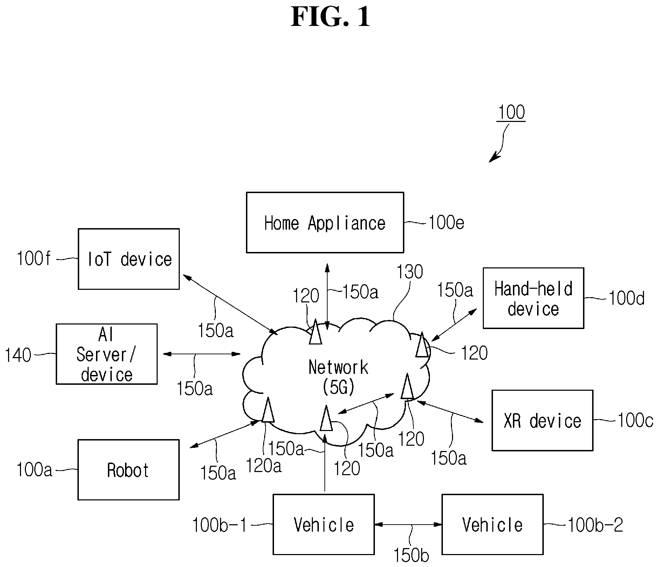

FIG. 1 is a view showing an example of a communication system applicable to the present disclosure.

Referring to FIG. 1, the communication system 100 applicable to the present disclosure includes a wireless device, a base station and a network. The wireless device refers to a device for performing communication using radio access technology (e.g., 5G NR or LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, the vehicles may include a vehicle having a wireless communication function, an autonomous vehicle, a vehicle capable of performing vehicle-to-vehicle communication, etc. The vehicles 100b-1 and 100b-2 may include an unmanned aerial vehicle (UAV) (e.g., a drone). The XR device 100c includes an augmented reality (AR)/virtual reality (VR)/mixed reality (MR) device and may be implemented in the form of a head-mounted device (HMD), a head-up display (HUD) provided in a vehicle, a television, a smartphone, a computer, a wearable device, a home appliance, a digital signage, a vehicle or a robot. The hand-held device 100d may include a smartphone, a smart pad, a wearable device (e.g., a smart watch or smart glasses), a computer (e.g., a laptop), etc. The home appliance 100e may include a TV, a refrigerator, a washing machine, etc. The IoT device 100f may include a sensor, a smart meter, etc. For example, the base station 120 and the network 130 may be implemented by a wireless device, and a specific wireless device 120a may operate as a base station/network node for another wireless device.

Communication system applicable to the present disclosure

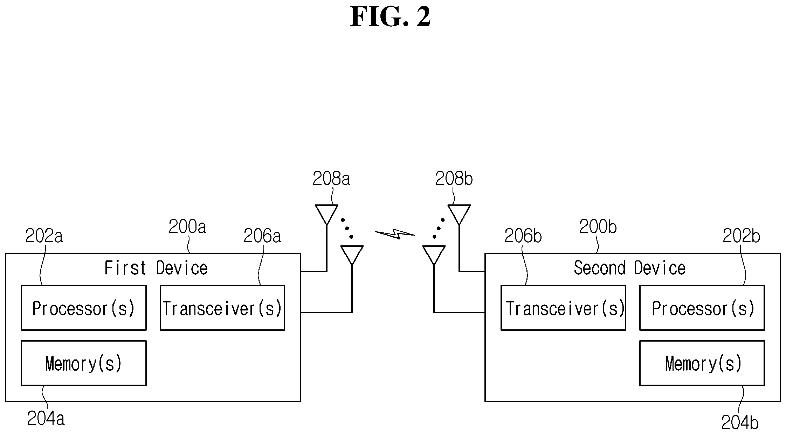

FIG. 2 is a view showing an example of a wireless device applicable to the present disclosure.

Referring to FIG. 2, a first wireless device 200a and a second wireless device 200b may transmit and receive radio signals through various radio access technologies (e.g., LTE or NR). Here, {the first wireless device 200a, the second wireless device 200b} may correspond to {the wireless device 100x, the base station 120} and/or {the wireless device 100x, the wireless device 100x} of FIG. 1.

The first wireless device 200a may include one or more processors 202a and one or more memories 204a and may further include one or more transceivers 206a and/or one or more antennas 208a. The processor 202a may be configured to control the memory 204a and/or the transceiver 206a and to implement descriptions, functions, procedures, proposals, methods and/or operational flowcharts disclosed herein. For example, the processor 202a may process information in the memory 204a to generate first information/signal and then transmit a radio signal including the first information/signal through the transceiver 206a. In addition, the processor 202a may receive a radio signal including second information/signal through the transceiver 206a and then store information obtained from signal processing of the second information/signal in the memory 204a. The memory 204a may be coupled with the processor 202a, and store a variety of information related to operation of the processor 202a. For example, the memory 204a may store software code including instructions for performing all or some of the processes controlled by the processor 202a or performing the descriptions, functions, procedures, proposals, methods and/or operational flowcharts disclosed herein. Here, the processor 202a and the memory 204a may be part of a communication modem/circuit/chip designed to implement wireless communication technology (e.g., LTE or NR). The transceiver 206a may be coupled with the processor 202a to transmit and/or receive radio signals through one or more antennas 208a. The transceiver 206a may include a transmitter and/or a receiver. The transceiver 206a may be used interchangeably with a radio frequency (RF) unit. In the present disclosure, the wireless device may refer to a communication modem/circuit/chip.

The second wireless device 200b may include one or more processors 202b and one or more memories 204b and may further include one or more transceivers 206b and/or one or more antennas 208b. The processor 202b may be configured to control the memory 204b and/or the transceiver 206b and to implement the descriptions, functions, procedures, proposals, methods and/or operational flowcharts disclosed herein. For example, the processor 202b may process information in the memory 204b to generate third information/signal and then transmit the third information/signal through the transceiver 206b. In addition, the processor 202b may receive a radio signal including fourth information/signal through the transceiver 206b and then store information obtained from signal processing of the fourth information/signal in the memory 204b. The memory 204b may be coupled with the processor 202b to store a variety of information related to operation of the processor 202b. For example, the memory 204b may store software code including instructions for performing all or some of the processes controlled by the processor 202b or performing the descriptions, functions, procedures, proposals, methods and/or operational flowcharts disclosed herein. Herein, the processor 202b and the memory 204b may be part of a communication modem/circuit/chip designed to implement wireless communication technology (e.g., LTE or NR). The transceiver 206b may be coupled with the processor 202b to transmit and/or receive radio signals through one or more antennas 208b. The transceiver 206b may include a transmitter and/or a receiver. The transceiver 206b may be used interchangeably with a radio frequency (RF) unit. In the present disclosure, the wireless device may refer to a communication modem/circuit/chip.

Structure of wireless device applicable to the present disclosure

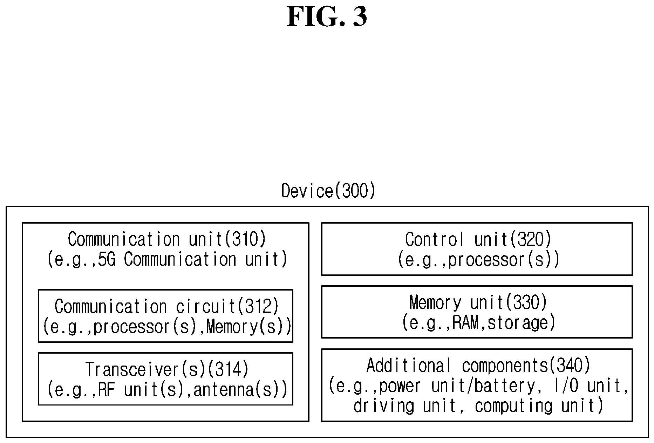

FIG. 3 is a view showing another example of a wireless device applicable to the present disclosure.

Referring to FIG. 3, a wireless device 300 may correspond to the wireless devices 200a and 200b of FIG. 2 and include various elements, components, units/portions and/or modules. For example, the wireless device 300 may include a communication unit 310, a control unit (controller) 320, a memory unit (memory) 330 and additional components 340. The communication unit may include a communication circuit 312 and a transceiver(s) 314. For example, the communication circuit 312 may include one or more processors 202a and 202b and/or one or more memories 204a and 204b of FIG. 2. For example, the transceiver(s) 314 may include one or more transceivers 206a and 206b and/or one or more antennas 208a and 208b of FIG. 2. The control unit 320 may be electrically coupled with the communication unit 310, the memory unit 330 and the additional components 340 to control overall operation of the wireless device. For example, the control unit 320 may control electrical/mechanical operation of the wireless device based on a program/code/instruction/information stored in the memory unit 330. In addition, the control unit 320 may transmit the information stored in the memory unit 330 to the outside (e.g., another communication device) through the wireless/wired interface using the communication unit 310 over a wireless/wired interface or store information received from the outside (e.g., another communication device) through the wireless/wired interface using the communication unit 310 in the memory unit 330.

Hand-held device applicable to the present disclosure

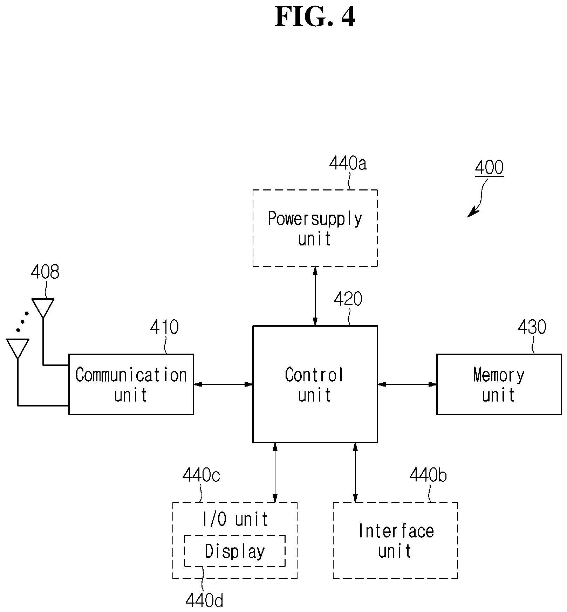

FIG. 4 is a view showing an example of a hand-held device applicable to the present disclosure.
FIG. 4 shows a hand-held device applicable to the present disclosure. The hand-held device may include a smartphone, a smart pad, a wearable device (e.g., a smart watch or smart glasses), and a hand-held computer (e.g., a laptop, etc.). The hand-held device may be referred to as a mobile station (MS), a user terminal (UT), a mobile subscriber station (MSS), a subscriber station (SS), an advanced mobile station (AMS) or a wireless terminal (WT).
Referring to FIG. 4, the hand-held device 400 may include an antenna unit (antenna) 408, a communication unit (transceiver) 410, a control unit (controller) 420, a memory unit (memory) 430, a power supply unit (power supply) 440a, an interface unit (interface) 440b, and an input/output unit 440c. An antenna unit (antenna) 408 may be part of the communication unit 410. The blocks 410 to 430/440a to 440c may correspond to the blocks 310 to 330/340 of FIG. 3, respectively.
The communication unit 410 may transmit and receive signals (e.g., data, control signals, etc.) to and from other wireless devices or base stations. The control unit 420 may control the components of the hand-held device 400 to perform various operations. The control unit 420 may include an application processor (AP). The memory unit 430 may store data/parameters/program/code/instructions necessary to drive the hand-held device 400. In addition, the memory unit 430 may store input/output data/information, etc. The power supply unit 440a may supply power to the hand-held device 400 and include a wired/wireless charging circuit, a battery, etc. The interface unit 440b may support connection between the hand-held device 400 and another external device. The interface unit 440b may include various ports (e.g., an audio input/output port and a video input/output port) for connection with the external device. The input/output unit 440c may receive or output video information/signals, audio information/signals, data and/or user input information. The input/output unit 440c may include a camera, a microphone, a user input unit, a display 440d, a speaker and/or a haptic module.

For example, in case of data communication, the input/output unit 440c may acquire user input information/signal (e.g., touch, text, voice, image or video) from the user and store the user input information/signal in the memory unit 430. The communication unit 410 may convert the information/signal stored in the memory into a radio signal and transmit the converted radio signal to another wireless device directly or transmit the converted radio signal to a base station. In addition, the communication unit 410 may receive a radio signal from another wireless device or the base station and then restore the received radio signal into original information/signal. The restored information/signal may be stored in the memory unit 430 and then output through the input/output unit 440c in various forms (e.g., text, voice, image, video and haptic).

Type of wireless device applicable to the present disclosure

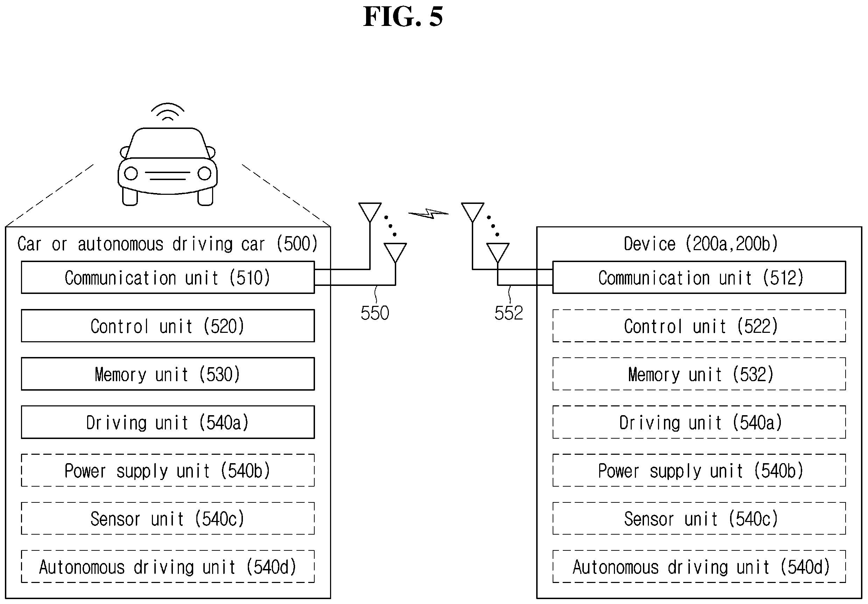

FIG. 5 is a view showing an example of a car or an autonomous driving car applicable to the present disclosure.

FIG. 5 shows a car or an autonomous driving vehicle applicable to the present disclosure. The car or the autonomous driving car may be implemented as a mobile robot, a vehicle, a train, a manned/unmanned aerial vehicle (AV), a ship, etc. and the type of the car is not limited.

Referring to FIG. 5, the car or autonomous driving car 500 may include an antenna unit (antenna) 508, a communication unit (transceiver) 510, a control unit (controller) 520, a driving unit 540a, a power supply unit (power supply) 540b, a sensor unit 540c, and an autonomous driving unit 540d. The antenna unit 550 may be configured as part of the communication unit 510. The blocks 510/530/540a to 540d correspond to the blocks 410/430/440 of FIG. 4.

The communication unit 510 may transmit and receive signals (e.g., data, control signals, etc.) to and from external devices such as another vehicle, a base station (e.g., a base station, a road side unit, etc.), and a server. The control unit 520 may control the elements of the car or autonomous driving car 500 to perform various operations. The control unit 520 may include an electronic control unit (ECU).

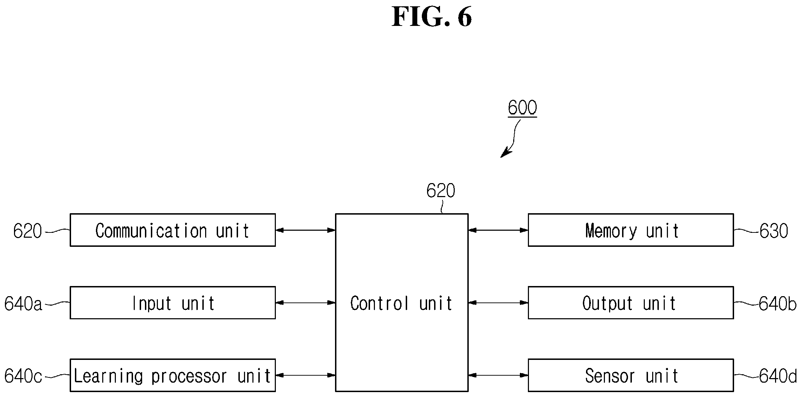

FIG. 6 is a diagram illustrating an example of an AI device applied to the present disclosure. For example, the AI device may be implemented as a fixed device or a movable device such as TV, projector, smartphone, PC, laptop, digital broadcasting terminal, tablet PC, wearable device, set-top box (STB), radio, washing machine, refrigerator, digital signage, robot, vehicle, etc.

Referring to FIG. 6, the AI device 600 may include a communication unit 610, a control unit 620, a memory unit 630, an input/output unit 640a/640b, a learning processor unit 640c and a sensor unit 640d. Blocks 610 to 630/640A to 640D may correspond to blocks 310 to 330/340 of FIG. 3, respectively.

The communication unit 610 may transmit and receive a wired and wireless signal (e.g., sensor information, user input, learning model, control signal, etc.) to and from external devices such as another AI device (e.g., 100x, 120, 140 in FIG. 1) or an AI server (140 in FIG. 1) using wired/wireless communication technology. To this end, the communication unit 610 may transmit information in the memory unit 630 to an external device or send a signal received from an external device to the memory unit 630.

The control unit 620 may determine at least one executable operation of the AI device 600 based on information determined or generated using a data analysis algorithm or machine learning algorithm. In addition, the control unit 620 may control the components of the AI device 600 to perform the determined operation. For example, the control unit 620 may request, search, receive, or utilize the data of the learning processor 640c or the memory unit 630, and control the components of the AI device 600 to perform predicted operation or operation determined to be preferred among at least one executable operation. In addition, the control unit 620 collects history information including a user's feedback on the operation content or operation of the AI device 600, and stores it in the memory unit 630 or the learning processor 640c or transmit it to an external device such as the AI server (140 in FIG. 1). The collected history information may be used to update a learning model.

The memory unit 630 may store data supporting various functions of the AI device 600. For example, the memory unit 630 may store data obtained from the input unit 640a, data obtained from the communication unit 610, output data of the learning processor unit 640c, and data obtained from the sensor unit 640. Also, the memory unit 630 may store control information and/or software code required for operation/execution of the control unit 620.

The input unit 640a may obtain various types of data from the outside of the AI device 600. For example, the input unit 620 may obtain learning data for model learning, input data to which the learning model is applied, etc. The input unit 640a may include a camera, a microphone and/or a user input unit, etc. The output unit 640b may generate audio, video or tactile output. The output unit 640b may include a display unit, a speaker and/or a haptic module. The sensor unit 640 may obtain at least one of internal information of the AI device 600, surrounding environment information of the AI device 600 or user information using various sensors. The sensor unit 640 may include a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, an optical sensor, a microphone, and/or a radar.

The learning processor unit 640c may train a model composed of an artificial neural network using learning data. The learning processor unit 640c may perform AI processing together with the learning processor unit of the AI server (140 in FIG. 1). The learning processor unit 640c may process information received from an external device through the communication unit 610 and/or information stored in the memory unit 630. In addition, the output value of the learning processor unit 640c may be transmitted to an external device through the communication unit 610 and/or stored in the memory unit 630.

Core implementation technology of 6G system

Artificial intelligence (AI)

The most important and newly introduced technology for the 6G system is AI. AI was not involved in the 4G system. 5G systems will support partial or very limited AI. However, the 6G system will support AI for full automation. Advances in machine learning will create more intelligent networks for real-time communication in 6G. Introducing AI in communication may simplify and enhance real-time data transmission. AI may use a number of analytics to determine how complex target tasks are performed. In other words, AI may increase efficiency and reduce processing delay.

Time consuming tasks such as handover, network selection, and resource scheduling may be performed instantly by using AI. AI may also play an important role in machine-to-machine, machine-to-human and human-to-machine communication. In addition, AI may be a rapid communication in a brain computer interface (BCI). AI-based communication systems may be supported by metamaterials, intelligent structures, intelligent networks, intelligent devices, intelligent cognitive radios, self-sustained wireless networks, and machine learning.

Recently, attempts have been made to integrate AI with wireless communication systems, but application layers, network layers, and in particular, deep learning have been focused on the field of wireless resource management and allocation. However, such research is gradually developing into the MAC layer and the physical layer, and in particular, attempts to combine deep learning with wireless transmission are appearing in the physical layer. AI-based physical layer transmission means applying a signal processing and communication mechanism based on an AI driver rather than a traditional communication framework in fundamental signal processing and communication mechanisms. For example, deep learning-based channel coding and decoding, deep learning-based signal estimation and detection, deep learning-based multiple input multiple output (MIMO) mechanism, and AI-based resource scheduling and allocation may be included.

Machine learning may be used for channel estimation and channel tracking, and may be used for power allocation, interference cancellation, and the like in a downlink (DL) physical layer. Machine learning may also be used for antenna selection, power control, symbol detection, and the like in a MIMO system.

However, the application of DNN for transmission in the physical layer may have the following problems.

Deep learning-based AI algorithms require a lot of training data to optimize training parameters. However, due to limitations in obtaining data in a specific channel environment as training data, a lot of training data is used offline. This is because static training on training data in a specific channel environment may cause a contradiction between diversity and dynamic characteristics of a radio channel.

In addition, current deep learning mainly targets real signals. However, the signals of the physical layer of wireless communication are complex signals. In order to match the characteristics of a wireless communication signal, additional research on a neural network that detects a complex domain signal is required.

Hereinafter, machine learning will be described in greater detail.

Machine learning refers to a series of operations for training a machine to create a machine capable of performing a task which can be performed or is difficult to be performed by a person. Machine learning requires data and a learning model. In machine learning, data learning methods may be largely classified into three types: supervised learning, unsupervised learning, and reinforcement learning.

Neural network learning is to minimize errors in output. Neural network learning is a process of updating the weight of each node in the neural network by repeatedly inputting learning data to a neural network, calculating the output of the neural network for the learning data and the error of the target, and backpropagating the error of the neural network from the output layer of the neural network to the input layer in a direction to reduce the error.

Supervised learning uses learning data labeled with correct answers in the learning data, and unsupervised learning may not have correct answers labeled with the learning data. That is, for example, learning data in the case of supervised learning related to data classification may be data in which each learning data is labeled with a category. Labeled learning data is input to the neural network, and an error may be calculated by comparing the output (category) of the neural network and the label of the learning data. The calculated error is backpropagated in a reverse direction (i.e., from the output layer to the input layer) in the neural network, and the connection weight of each node of each layer of the neural network may be updated according to backpropagation. The amount of change in the connection weight of each updated node may be determined according to a learning rate. The neural network's computation of input data and backpropagation of errors may constitute a learning cycle (epoch). The learning rate may be applied differently according to the number of iterations of the learning cycle of the neural network. For example, in the early stages of neural network learning, a high learning rate is used to allow the neural network to quickly achieve a certain level of performance to increase efficiency, and in the late stage of learning, a low learning rate may be used to increase accuracy.

A learning method may vary according to characteristics of data. For example, when the purpose is to accurately predict data transmitted from a transmitter in a communication system by a receiver, it is preferable to perform learning using supervised learning rather than unsupervised learning or reinforcement learning.

The learning model corresponds to the human brain, and although the most basic linear model may be considered, a paradigm of machine learning that uses a neural network structure with high complexity such as artificial neural networks as a learning model is referred to as deep learning.

The neural network cord used in the learning method is largely classified into deep neural networks (DNN), convolutional deep neural networks (CNN), and recurrent Boltzmann machine (RNN), and this learning model may be applied.

Hereinafter, a method of adjusting a split point based on an AI/ML (artificial intelligence/machine learning) model based on the foregoing will be described.

Based on the foregoing, large amounts of data (high-dimensional data collected through biosensors, large images, large videos) may be generated, collected, and processed through AI/ML models. In this case, the device for generating and collecting data may be a cellular Internet of Things (IoT) device.

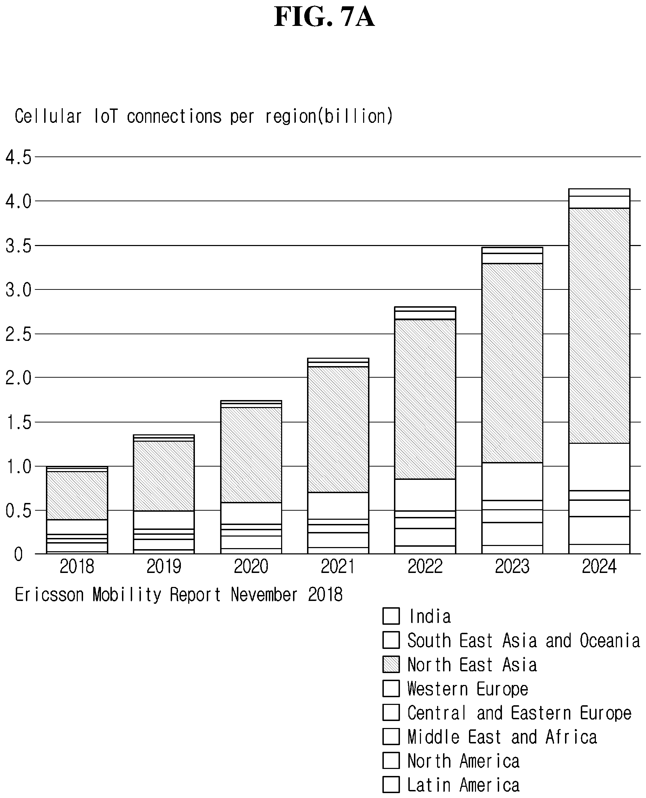

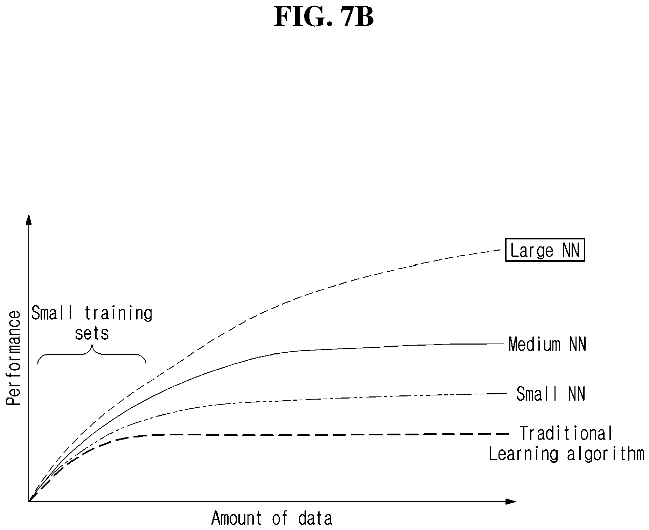

FIG. 7 is a diagram illustrating materials related to data generation and collection according to an embodiment of the present disclosure.

Referring to FIG. 7A, it can be seen that the amount of cellular IoT connection for data generation and collection is steadily increasing. Today, due to the increase in the number of Cellular IoT devices, the amount of Cellular IoT connection has increased. This also made it possible to secure large amounts of data of the device. The device may classify and predict large amounts of high-dimensional data through AI/ML models. Performance of AI/ML models for processing large amounts of data is also improving.

Referring to FIG. 7B, the graph shows the amount of data and performance of a large neural network (LNN), a medium neural network (MNN), a small neural network (SNN), and a traditional learning algorithm (TLA). The horizontal axis of the graph represents the amount of data, and the vertical axis represents performance. LNNs, MNNs, SNNs, and TLAs all show a gradual increase in performance in a place where there are small training sets with small amounts of data. However, it can be seen that as the amount of data increases, a point in time when performance improvement slows down is set in the order of TLA, SNN, and MNN, whereas in the case of LNN, performance improves well while using more data compared to other models. Therefore, it can be seen that large-scale AI/ML models that may improve performance to match the amount of data are needed to process huge amounts of data.

The AI/ML model may build a deep and wide model by continuous learning using a large amount of data to improve performance. Accordingly, the size of the model gradually increases, and the model may include up to millions of parameters.

When the size of a model increases to process large-scale data, the following problems occur.

As the amount of data increases, the model may require large computing power to perform training and inference. However, the computing power of each device is limited. If the limit of data which may be processed by the device is exceeded, the device cannot perform training and inference through the AI/ML model. For example, inference may be a process of passing data through a network and outputting a result according to an input. For example, inference may be a process of calculating at least one layer. Also, as an example, training may be a process of comparing an inference result with a correct answer and adjusting variables inside the network so that the inference result approaches or coincides with the correct answer when an inference is performed later.

In addition, when offloading data generated or collected in each device to a server (base station), a latency problem occurs as a large amount of data is transmitted through uplink with limited resources, or a problem of setting excessive uplink bandwidth may occur. Also, due to the transmission of raw data, various types of personal information protection problems may occur.

Therefore, in order to solve the latency problem of the AI/ML device processing large amounts of data and to protect personal information, it may be necessary to build a split AI/ML model for splitting and performing an AI/ML model set between a device and a network.

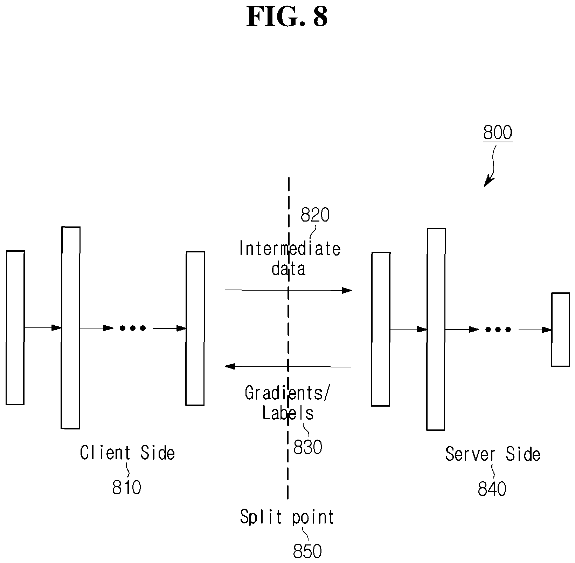

FIG. 8 illustrates an example of a system 800 that performs a split AI/ML model, according to one embodiment of the present disclosure.

Referring to FIG. 8, the system 800 may assign a split AI/ML model for performing split inference in units of split layers according to requirements (calculation capability, latency, personal information protection) of services (object recognition, augmented reality) to a device and a server (base station). At this time, the split model 810 assigned to the device may perform data processing by forward propagation up to a split point 850, and deliver intermediate data 820, which is a result (output) performed up to the split point 850, to a split model 840 assigned to the server. That is, the split point 850 is a point at which the inference performance of the AI/ML model is split. For example, when a split AI/ML model is built between a device and a server, the device may perform split inference on layers up to the split point, and the server may perform split inference on layers after the split point. The split model 840 assigned to the server may perform split inference using the intermediate data 820 received from the split model assigned to the device. The split model 840 assigned to the server may deliver a label 830, which is a result of completion of the split inference, to the device.

For example, the device 810 may perform inference by receiving the label 830 from the server. When the device performs learning, it may receive a gradient of a loss function for the intermediate data 820 from the server and perform a back propagation procedure. Split inference may be referred to as split inference, partial inference, or other terms having an equivalent technical meaning, and may not be limited to a specific name. However, for convenience of description, the following description is based on split inference.

As shown in FIG. 8, a split point is needed for a device and a server to perform split inference through a split AI/ML model. A split point may be a point where a model performing inference is split into a device and a server. As an example, an initial split point may be set at a time when a split model is completely learned. A split model type as in FIG. 8 may be referred to as vanilla split modeling.

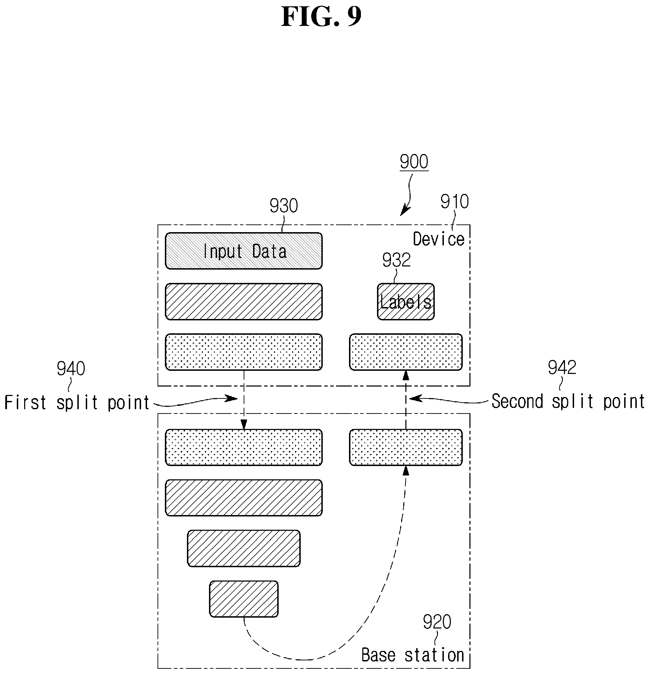

In the vanilla split model of FIG. 8, since a device does not deliver its raw data but should still deliver a label to a base station, a privacy issue may occur regarding a label containing important information on control and monitoring of devices and the like. To solve the problem, as shown in FIG. 9 below, a U-shaped split AI/ML model may be used.

FIG. 9 illustrates an example of a system 900 where a U-shaped split AI/ML model is applied in accordance with an embodiment of the present disclosure.

Referring to FIG. 9, the system 900 may allocate a split AI/ML model for performing split inference in a split layer unit to a device 910 and a base station 920. Herein, the system 900 may implement a U-shaped AI/ML model by configuring two split points 940 and 942 to make not the base station 920 but the device 910 obtain a label 932. As an example, the split AI/ML model allocated to the device 910 may perform inference for layers from an input layer to a first split point 940 by using input data 930. The device 910 may generate first intermediate data as an inference result and transmit the first intermediate data to the base station 920. The split AI/ML model allocated to the base station 920 may perform inference for layers from the first split point 940 to a second split point 942 by using the received first intermediate data. The base station 920 may generate second intermediate data as an inference result and transmit the second intermediate data to the device 910. Then, the split AI/ML model allocated to the device 910 may perform inference from the second split point 942 to an output layer by using the second intermediate data received from the base station 920. The device 910 may generate a label 932 as an inference result. In this case, since the device 932, not the base station 920, obtains the label 932, the privacy problem about the label 932 may be solved.

A split point, that is, a position for splitting an AI/ML model, may be determined through a split engine. A split engine may receive a size of intermediate data transmitted from a device to a server via uplink and a required amount of computation necessary for calculating layers from the device to a split point, determine a case where the split point should be modified, and adjust the split point. The split engine notifies a determination result and an adjustment result to the device and the server, and the device and the server perform inference according to the adjusted split point.

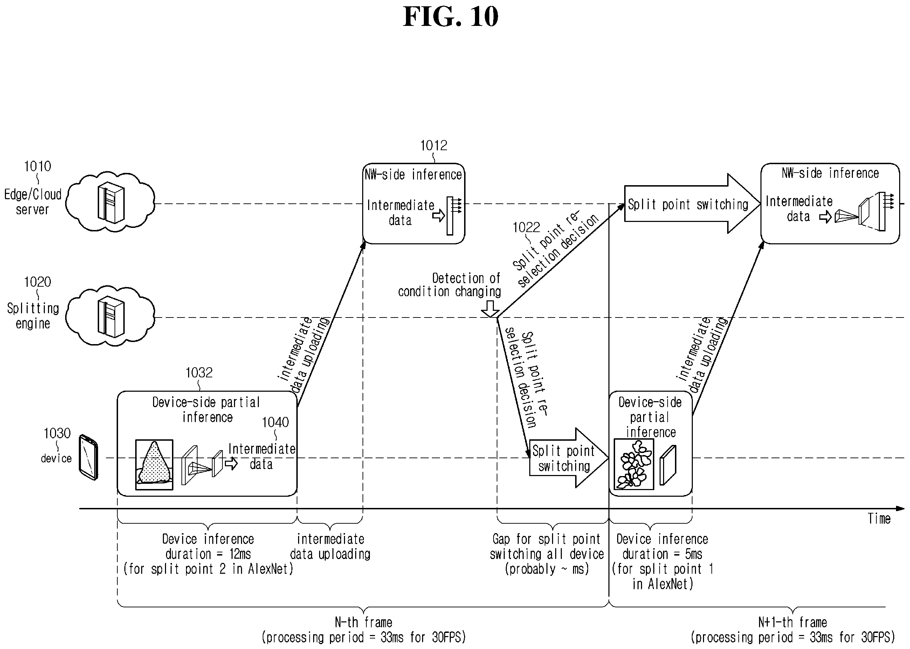

FIG. 10 illustrates an example of an operation for determining a split point of a split engine in accordance with an embodiment of the present disclosure.

Referring to FIG. 10, a device 1030 may generate intermediate data 1040 by performing split inference 1032 using a split AI/ML model which is allocated to the device 1030. The device 1030 may transmit the generated intermediate data 1040 to a server 1010. The server 1010 may perform split inference 1012 using a split AI/ML model, which is allocated to a network, by using the received intermediate data 1040.

A split engine 1020 may adjust a split point based on a size of the intermediate data 1040 and a required amount of computation necessary for the device 1030 to calculate for layers up to the split point. As an example, when it is determined that the device 1030 is suitable for performing split inference for more layers than usual, the split engine 1020 may adjust the split point toward an output layer. In addition, when it is determined that the server 1010 is suitable for performing split inference for more layers than usual, the split engine 1020 may adjust the split point toward an input layer.

A method of determining a split point by using the split engine described in FIG. 10 is designed based on the vanilla split AI/ML model of FIG. 8. Accordingly, in case the vanilla split AI/ML model determines a split point by using the split engine, only intermediate data delivered by a device to a base station via uplink may be considered. When determining and adjusting a split point, unlike the vanilla split AI/ML model, a U-shaped split AI/ML model needs to consider not only intermediate data, which a device delivers to a base station via uplink, but also intermediate data which the base station delivers to the device via downlink.

The split engine may adjust a split point as semi-static based on a size of intermediate data and a required amount of computation necessary for the device to calculate for layers from an input layer to the split point. In case that the device and the base station perform split inference in real time communication, the communication performance and the up-to-dateness of information may depend on a transmission state of intermediate data. The method of adjusting a split point by using the split engine may hardly reflect a real-time environment of intermediate data that is periodically and continuously delivered.

In order to maintain the up-to-dateness of information while performing split inference, the timeliness or freshness of data delivered from a source to a destination needs to be quantified, and communication needs to be performed based on a quantified value. In order to quantify up-to-dateness of data, besides a delay time and throughput in transmission of data, a delay time due to packet loss and a queueing delay time or buffer at a source need to be considered. AoI is a performance indicator for evaluating freshness of intermediate data that is inference result information received at a destination.

Accordingly, the present disclosure proposes a method of adjusting a split point based on AoI of intermediate data which is delivered between a device and a base station via uplink and downlink, when the device and the base station perform inference through a U-shaped split AI/ML model.

Hereinafter, AoI, which is an indicator for split adjustment in a U-shaped split AI/MI, model, will be described. AoI may be referred to as age or another term having an equivalent technical meaning and is not limited to any specific name.

AoI is a difference between generation time of data and use time of data. AoI($\triangle^{(t)}$) may be as shown in Equation 1 below.

## Equation 1

$$\triangle(t) = t - U(t)$$

$t$ is a current time, and $U(t)$ is a generation time of a packet which is received most recently at time t at reception side (monitor). AoI is a time elapsed from $U(t)$ to the current time t. AoI is a criterion indicating freshness/up-to-dateness of information from the perspective of reception side. As AoI is smaller, a latest packet arrives at reception side. That is, as AoI is smaller, the up-to-dateness of information may be maintained.

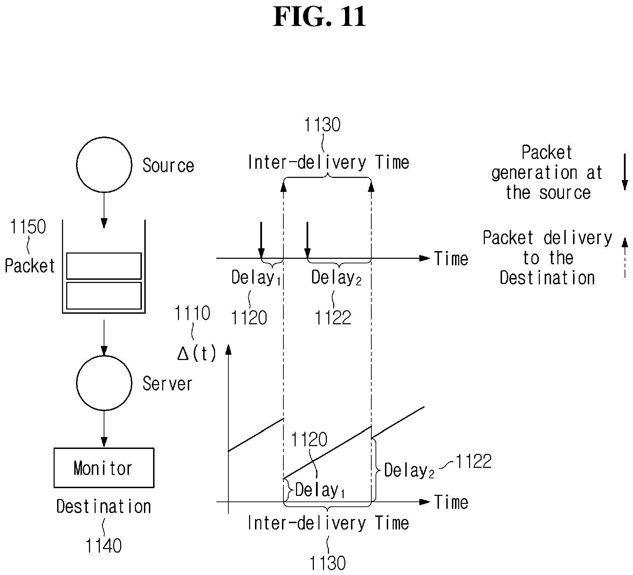

FIG. 11 illustrates an example of measuring an age of information (AoI) in accordance with an embodiment of the present disclosure.

Referring to FIG. 11, two factors contributing to determining AoI ($\triangle(t)$) 1110 may be a packet delay 1120 and 1122 and an inter-delivery time 1130. As an example, the packet delay 1120 and 1122 may be a time elapsed from generation to delivery of the packet 1150, and the inter-delivery time 1130 may be a time taken for the new packet 1150 to be delivered to the receive side 1140 after the packet 1150 is delivered to the receive side 1140. The packet delay 1120 and 1122 may include at least one of processing delay, queueing delay, transmission delay, and propagation delay. As an example, the system may increase AoI ($\triangle(t)$) 1110 linearly until the packet is delivered to the receive side 1140. As an example, when the packet 1150 reaches the receive side 1140, the system may decrease AoI ($\triangle(t)$) 1110 by the packet delay 1120 and 1122.

In order to maintain up-to-dateness of information while a device and a base station perform split inference through a U-shaped split AI/MI, model, a system needs to be constructed to minimize AoI. Table 1 below exemplifies average AoIs according to a packet delay and an inter-delivery time of M/M/1 queue with a fixed service rate $\mu$=1 and a variable arrival rate $\lambda$.

Table 1

|  | $\lambda$ (pkt/sec) | $\xi$ [delay] (sec) | $\xi$ [Inter-delivery] (sec) | Average AoI (Sec) |
|---|---|---|---|---|
| ① | 0.01 | 1.01 | 100.00 | 101.00 |
| ② | 0.53 | 2.13 | 1.89 | 3.48 |
| ③ | 0.99 | 100.00 | 1.01 | 100.02 |

Referring to Table 1, ① with a high inter-delivery time and ③ with a high packet delay have a high average AoI despite having a low packet delay and a low inter-delivery time, respectively. ② with a lowest average AoI has a low packet delay and a low inter-delivery time. That is, it is apparent that both indicators of packet delay and inter-delivery time should be considered to have a small AoI. When a packet with a small delay time is periodically delivered, improved communication performance may be obtained due to a small AoI. That is, it is important to periodically maintain a minimum AoI value (freshness of corresponding intermediate data is improved, that is, an age of data stays small). A method of maintaining a state of information as up-to-date and improving communication performance at receive side is to minimize an average AoI. Hereinafter, a method of calculating an AoI, which is an indicator that is a criterion for adjusting a split point for up-to-dateness of information in a U-shaped AI/ML model.

Calculating and minimizing AoI may be mathematically very complicated according to an application of service that is provided. Accordingly, a device and a base station may utilize a peak age of information (PAoI), which is a maximum AoI value measured immediately before information is received at reception side, for adjusting a split point. The device and the base station may adjust the split point by comparing the PAoI and a threshold value that is configured at random.

If the AoI does not increase linearly, a CoUD metric may be used. As an example, CoUD ($C(t)$) may be a metric of modeling a "dissatisfaction" level due to staleness of information or a "necessity" level for new information at reception side. A CoUD metric may be different according to a service to be provided or an application to be applied to a service. CoUD may be expressed by Equation 2 below.

## Equation 2

$$C(t) = f_s(t - U(t))$$

That is, CoUD $C(t)$ applies a nondecreasing nonlinear function $f_s$ to Equation 1 about AoI.

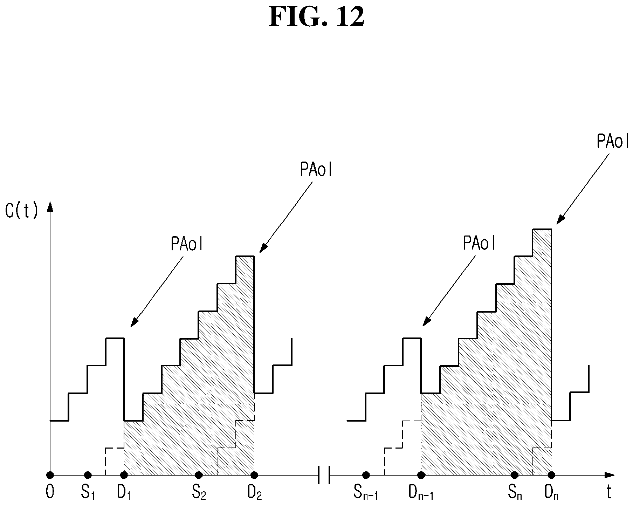

FIG. 12 illustrates an example of measuring an AoI by using a cost of update delay (CoUD) metric in accordance with an embodiment of the present disclosure.

Referring to FIG. 12, an example of a graph applying a nonlinear CoUD metric may be identified. Herein, AoI ($\triangle(t)$) may be expressed by Equation 3 below.

## Equation 3

$$C(t) = f_s(t - U(t)) = \lfloor \triangle(t) \rfloor$$

That is, by applying the nonlinear function $f_s$ according to a service to AoI($\triangle(t)$), an AoI with nonlinear staleness of information may be measured through CoUD. A CoUD metric may be differently configured according to an application for a service to be provided. As an example, an AoI for information obtained from an application may be measured through a CoUD metric.

In a system where a U-shaped split model is applied for data security, a plurality of devices may perform inference with a base station, and each device communicating with the base station via uplink and downlink may have a different wireless environment. Accordingly, when a device and a base station adjust a split point in a system where a U-shaped split model is applied, not a simple AoI ($\triangle(t)$) that increases linearly but $C(t)$ applying a CoUD metric suitable for an application link of a service may be used.

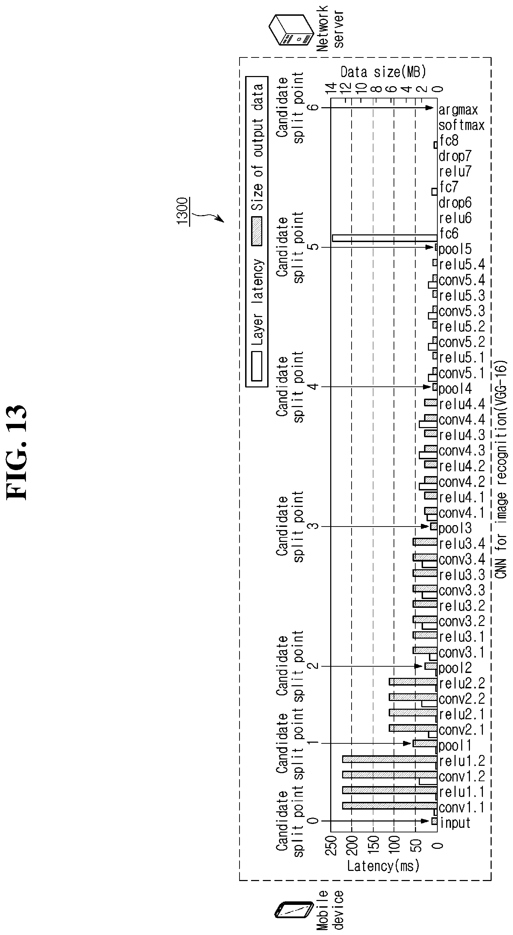

FIG. 13 illustrates an example of a graph showing communication performance evaluation for a device according to a candidate split point configuration of a VGG-16 model in accordance with an embodiment of the present disclosure.

Referring to FIG. 13, it is possible to identify communication performance of a device according to a candidate split point configuration for applying a split model, when a VGG-16 model is operated at 30FPS (Frame Per Seconds). Table 2 exemplifies an uplink data rate, which is required according to a candidate split point that is configured when a VGG-16 model is operated at 30FPS, and split inference latency at a device. Table 2 is a result based on a 227x227 input image.

Table 2

| Split point | Approximate output data size (MByte) | Required UL data rate (Mbps) @30FPS | Device-side inference latency (ms) @33FPS |
|---|---|---|---|
| Candidate split point 0 (Cloud-based inf erence) | 0.6 | 145 | N/A |
| Candidate split point 1(after pool1 layer) | 3 | 720 | 55 |
| Candidate split point 2(after pool2 layer) | 1.5 | 360 | 115 |
| Candidate split point 3(after pool3 layer) | 0.8 | 192 | 240 |
| Candidate split point 4(after pool4 layer) | 0.5 | 120 | 390 |
| Candidate split point 5(after pool5 layer) | 0.1 | 24 | 470 |
| Candidate split point 6 (Device-based inference) | N/A | N/A | 730 |

In FIG. 13 and Table 2, it is possible to know that a size of intermediate data, which a device generates by performing split inference according to a configured split point, a radio uplink data rate for delivering the generated intermediate data to a base station, a split inference latency at the device are different. This means that, when a device and a base station perform split inference through a split AI/ML model, all the three factors mentioned above should be considered. In addition, generally, as a wireless environment is a lossy environment, distortion and error, which are generated by wirelessly delivering intermediate data, need to be considered.

However, according to an application of a service to be provided, when a split point in a split AI/ML model is adjusted by considering all the factors mentioned above, an excessive burden may occur as compared with the computing power of a device. In addition, since a base station may have N: 1 connection with a plurality of devices, if a split point for transmitting and receiving intermediate data at each device is adjusted by considering all the above-mentioned factors, an excessive burden may occur as compared with the computing power of the base station. In a U-shaped split AI/ML model system, since a device and a base station perform inference using intermediate data that is transmitted via uplink and downlink, an AoI of the intermediate data has a significant effect on performance of inference. Accordingly, a split point may be adjusted using an AoI, an indicator of up-to-dateness/freshness of intermediate data in order to prevent an excessive burden and data loss at a device and a base station.

The present disclosure proposes a method of adjusting a split point based on an AoI of intermediate data, which is delivered between a device and a base station via uplink/downlink, in order to improve up-to-dateness/freshness of an inference result in a situation where the device and the base station perform split inference through a U-shaped split AI/MI, model.

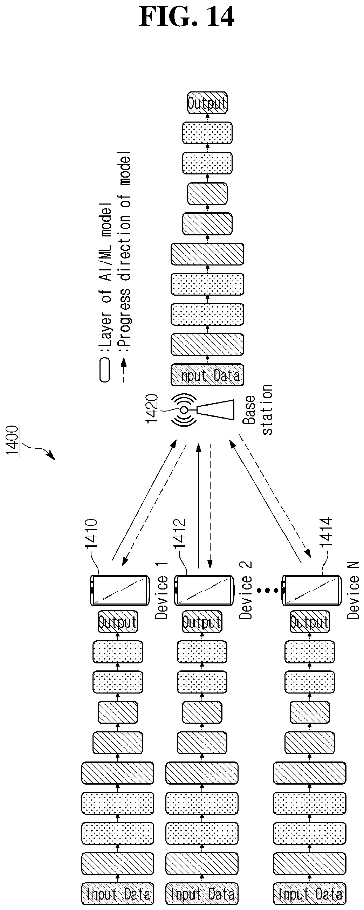

FIG. 14 illustrates an example of a system 1400 supporting a U-shaped split AI/MI, model in accordance with an embodiment of the present disclosure.

Referring to FIG. 14, the system 1400 may include a plurality of devices 1410, 1412 and 1414 and a base station 1420. As an example, an AI/ML model supporting a split AI/ML model is mounted on each of the plurality of the devices 1410, 1412 and 1414 and the base station 1420, and each of the devices 1410, 1412 and 1414 and the base station 1420 may possess an overall AI/ML model. As an example, in order to provide a service (control and state monitoring of devices) by a U-shaped split AI/ML model, the base station 1420 may deliver, to each of the devices 1410, 1412 and 1414, two initially configured split points and a nondecreasing nonlinear function $f_s$ of a CoUD metric that is used to calculate a nonlinearly increasing AoI of intermediate data that is delivered via uplink/downlink. As an example, since $f_s$ may be differently configured according to a service, each of the devices and the base station may be configured with different $f_s$. The devices 1410, 1412 and 1414 and the base station 1420 may perform learning and then adjust a split point based on an AoI of intermediate data that is measured by applying a CoUD metric from a time of performing inference.

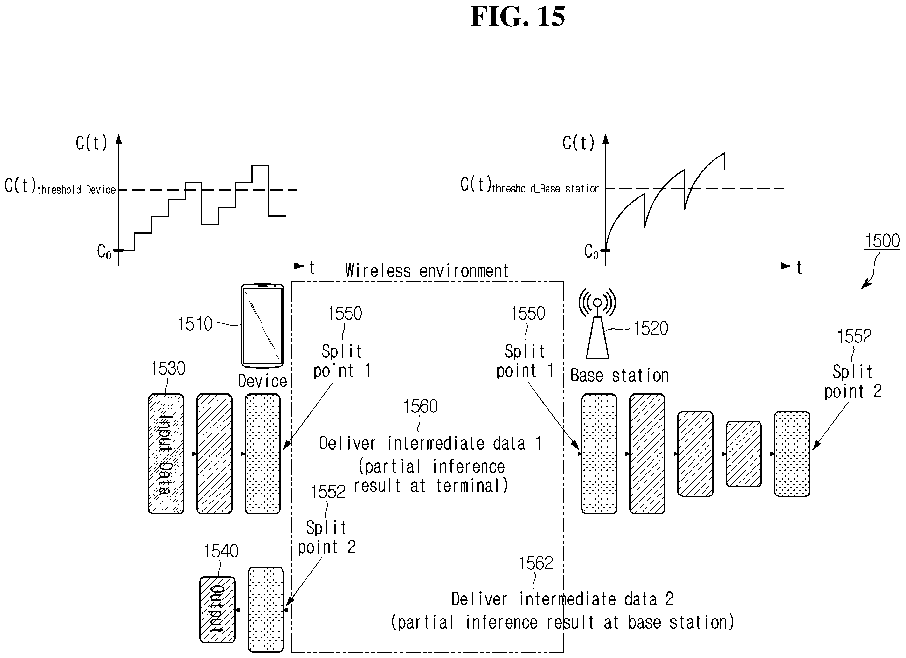

FIG. 15 illustrates an example of an operation of adjusting a split point in a U-shaped AI/ML split model 1500 in accordance with an embodiment of the present disclosure

Referring to FIG. 15, a device 1510 and a base station 1520 may perform U-shaped split inference formed by a configuration of a first split point 1550 and a second spit point 1552. As an example, the first split point 1550 may be a first split point configured between the device 1510 and the base station 1520. The second spilt point 1552 may be another split point configured between the base station 1520 and the device 1510 in a direction from the first split point 1550 to an output layer. The device 1510 and the base station 1520 may perform U-shaped split inference through each allocated split AI/ML model. As an example, the device 1510 may perform split inference for layers from an input layer to the first split point 1550. The device 1510 may generate first intermediate data 1560 as a result of performing split inference up to the first split point 1550. The device 1510 may transmit the generated intermediate data to the base station 1520. The base station 1520 may perform split inference for layers from the first split 1550 to the second split point 1552 by using the first intermediate data 1560 received from the device 1510. The base station 1520 may generate second intermediate data 1562 as a result of performing split inference up to the second split point 1540. The base station 1520 may transmit the generated second intermediate data 1562 to the device 1520. The device 1510 may perform split inference for layers from the second split point 1552 to the output layer by using the second intermediate data 1562 received from the device 1520.

As an example, after initial configuration, an AI/ML split model for performing U-shaped inference may be allocated to the device 1510 and the base station 1520. The device 1510 and the base station 1520 may each perform inference through the allocated AI/ML split model.

The device 1510 and the base station 1520 may adjust a split point to keep up-to-date information by minimizing AoI. The device 1510 and the base station 1520 may measure AoI that is a criterion of split point adjustment. As an example, each of the device 1510 and the base station 1520 may measure a PAoI, which a maximum value of AoI at a time of receiving intermediate data, in order to simplify AoI calculation. As an example, the device 1510 may increase AoI at a time of transmitting the first intermediate data 1560, which is an inference result for layers from the input layer 1530 to the first split point 1550, to the base station 1520 via uplink. The device 1510 may check $C(t)$, which is a CoUD metric result, at a time where the base station 1520 receives the second intermediate data 1562, which is an inference result for layers from the first split point 1550 to the second split point 1552, via downlink. $C(t)$, which is calculated at the time where the device 1510 receives the second intermediate data 1562, may be expressed by Equation 4 below.

Equation 4

$$C(t) = f_s(t - U(t)_{basestationreceptiontime})$$

In Equation 4, $U(t)_{basestationreceptiontime}$ may be a time t where the base station 1520 receives the first intermediate data 1560 from the device 1510 via most recent uplink. Here, $U(t)_{basestationreceptiontime}$ may a freshness time.

As an example, the base station 1520 may increase an AoI at a time where a U-shaped split inference operation starts. The base station 1520 may identify $C(t)$, which is a CoUD metric result at a time of receiving the first intermediate data 1560 that the device transmits via uplink. $C(t)$, which the base station 1520 calculates at the time of receiving the first intermediate data 1560, may be expressed by Equation 5 below.

Equation 5

$$C(t) = f_s(t - U(t)_{inputlayerdeliverytime})$$

In Equation 5, $U(t)_{inputlayerdeliverytime}$ may be a time t where raw data of the device 1510 collected/generated most recently from a sensor is delivered to an input layer. Here, $U(t)_{inputlayerdeliverytime}$ may be a freshness time.

The device 1510 and the base station 1520 may adjust a split point according to a measured AoI. A split point may be adjusted while two initially configured split points are maintained. Herein, when split inference is performed according to the initially configured two split points, it is assumed that latest data is delivered while the first intermediate data 1560 and the second intermediate data 1562 delivered via uplink/downlink maintain a minimum AoI. As an example, when a split point is adjusted toward the input layer 1530 based on an overall model, the device may adjust the split point only up to a hidden layer where an activation function for preserving privacy for raw data is implemented at least once. As an example, when a split point is adjusted toward the output layer 1540 based on the overall model, the split point may be adjusted only before the output layer 1540 in order to maintain a structure of a U-shaped split AI/ML model.

As an example, a procedure of adjusting a split point by a base station in a U-shaped split AI/ML model may be as follows.

A base station may configure a threshold value $C(t)_{thresholdbasestation}$ based on an initially configured CoUD metric in order to perform U-shaped split inference. $C(t)_{thresholdbasestation}$ may be configured by considering an inference latency of a device up to a first split point, which is initially configured between the device and the base station, and a loss rate of first intermediate data that is delivered to the base station via uplink.

Next, the base station may receive information necessary for adjusting a split point that the device transmits via uplink. The information necessary for adjusting the split point may include at least one of information on a time where data collected/generated by a sensor, a monitor and the like is delivered to an input layer, first intermediate data that the device generates as a result of performing inference for layers from the input layer to the first split point, and location information of a second split point, which is adjusted based on a measured AoI value of second intermediate data that the base station generates as a result of performing inference for layers from the first split point to the second split point. Herein, when the base station initially performs a split adjustment procedure, since the second split point, which is initially configured, is not adjusted, the location information of the second split point may not be received by the base station.

The base station may identify a PAoI through a CoUD metric at a time where the information necessary for split inference is received from the device. The base station may adjust the first split point according to a comparison result between the identified PAoI value and the threshold value. In addition, the base station may perform split inference based on the information and the first intermediate data which are received from the device.

Since the base station possesses an overall split AI/ML model, the base station may know a size of the first intermediate data that is a result of split inference which the device performs up to the first spilt point. Accordingly, the base station may deliver location information of an adjusted first split point and a resource, which the device may transmit to via next uplink, to the device via downlink, when delivering information on a reception time of the first intermediate data and the second intermediate data that is a result of inference performed by the base station.

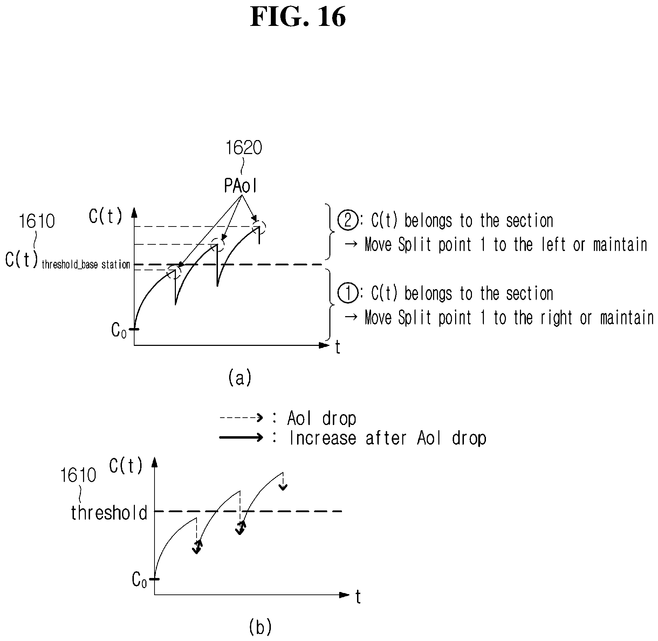

FIG. 16 illustrates an example of an operation of adjusting a first split point by a base station in a U-shaped split AI/ML model in accordance with an embodiment of the present disclosure.

Referring to (a) of FIG. 16, the base station may adjust a first point according to a comparison result between $C(t)_{thresholdbasestation}$ 1610 and PAoI 1620. As an example, the base station may adjust the first split toward an output layer or an input layer according to $C(t)_{thresholdbasestation}$ 1610 or maintain the first split point. As an example, the base station may move the first split point toward the output layer, when the first split point belongs to a section where a value of the PAoI 1620 is equal to or smaller than a value of $C(t)_{thresholdbasestation}$ 1610, or may maintain the first split point. As an example, the base station may maintain the first split point, when the first split point belongs to a section where the value of the PAoI 1620 is smaller than the value of $C(t)_{thresholdbasestation}$ 1610, while the first split point is located after a first hidden layer. As an example, when the first split point belongs to a section where the value of the PAoI 1620 is greater than the value of $C(t)_{thresholdbasestation}$ 1610, the base station may move the first split point toward the input layer or maintain the first split point. A location of the first split point may be determined to correspond to Equation 6 below. That is, the location of the first split point may be determined between after the input layer and before the second split point.

### Equation 6

$$\text{1st hidden layer} \le \text{location of Split point 1} < \text{location of Split point}$$

Referring to (b) of FIG. 16, an example of change in a nonlinearly increasing AoI according to time may be identified. An AoI, which a base station is measuring when receiving first intermediate data that is a result of split inference performed by a device, may decrease by a packet delay of the first intermediate data and then gradually increase until another first intermediate data is received.

As an example, a procedure of adjusting a split point by a device in a U-shaped split AI/ML model may be as follows.

In order to perform U-shaped split inference, the device may configure a threshold value $C(t)_{thresholddevice}$ based on an initially configured CoUD metric that is received from a base station. $C(t)_{thresholddevice}$ may be configured by considering an initially configured split inference latency of the base station and a loss rate of second intermediate data that is a result of inference performed by the base station and delivered to the device via downlink.

Next, the device may transmit information necessary split point adjustment to the base station via uplink. The information necessary for split point adjustment may include at least one of information on a time where data collected/generated by a sensor, a monitor and the like is delivered to an input layer, first intermediate data that the device generates as a result of performing inference for layers from the input layer to the first split point, and location information of a second split point, which is adjusted based on an AoI value of second intermediate data that the base station generates as a result of performing inference for layers from the first split point to the second split point. Herein, when the base station initially performs a split adjustment procedure, since the second split point is not adjusted and an initial configuration is kept, the location information of the adjusted second split point may not be received by the base station.

Next, the device may receive information on a reception time of the first intermediate data, the second intermediate data, which is a result of inference performed by the base station, and location information of an adjusted first split point from the base station. Herein, the device may identify a PAoI through a CoUD metric at a time of receiving the second intermediate data from the base station via downlink. The device may adjust the second split point according to a comparison result between the identified PAoI value and a threshold value. In addition, when receiving, from the base station, a time of receiving the first intermediate data by the base station and the second intermediate data that is a result of inference which the base station performs for a part of allocated layers, the device may perform split inference for layers from the second split point to an output layer by using the second intermediate data.

When determining whether or not to adjust the second split point, the device may perform split inference for new raw data by considering a location of the adjusted split point received from the base station and generate new first intermediate data. Next, the device may deliver information on a time of delivering the new raw data to the input layer, the new first intermediate data, and location data of the adjusted second split point to the base station.

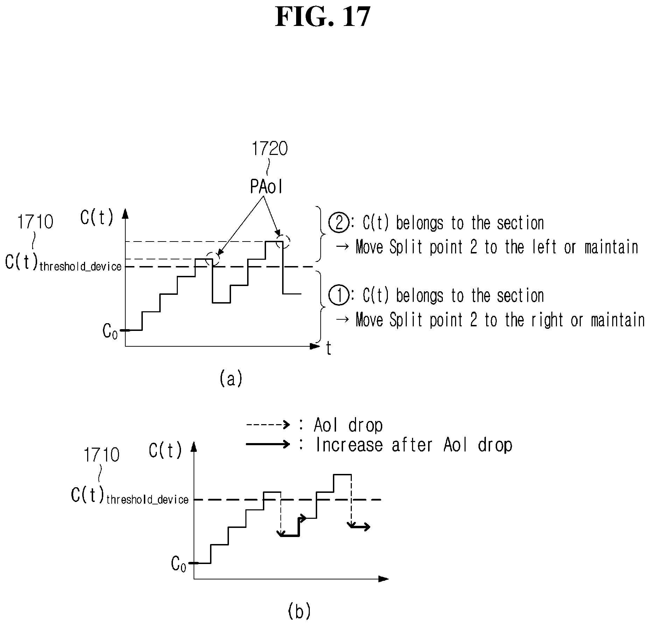

FIG. 17 illustrates an example of an operation of adjusting a second split point by a device in a U-shaped split AI/ML model in accordance with an embodiment of the present disclosure.

Referring to (a) of FIG. 17, the device may adjust a second split point according to a comparison result between $C(t)_{thresholddevice}$ 1710 and PAoI 1720. As an example, the device may adjust the second split point toward an output layer or an input layer or maintain the second split point according to $C(t)_{thresholddevice}$ 1710. As an example, when the second split point belongs to a section where PAoI 1720 is greater than $C(t)_{thresholddevice}$ 1710, the device may move the second split point to the input layer or maintain the second split point. That is, the second split point may be moved to the left. As an example, when the second split point belongs to a section where PAoI 1720 is smaller than $C(t)_{thresholddevice}$ 1710, the device may move the second split point to the output layer or maintain the second split point. That is, the second split point may be moved to the right. Herein, as an example, while the second split point is located immediately before the output layer, if the second split point belongs to a section where PAoI 1720 is smaller than $C(t)_{thresholddevice}$ 1710 (that is, a section where it can be adjusted by a rightward movement), the second split point may be maintained without being moved toward the output layer.

A location of the second split point may be determined to correspond to Equation 7 below. That is, the location of the second split point may be determined between after the second split point and before the output layer.

Equation 7

Location of Split point 1 < Location of Split point 2 < Output layer

Referring to (b) of FIG. 17, an example of change in a nonlinearly increasing AoI according to time may be identified. An AoI, which a device is measuring when receiving second intermediate data that is a result of split inference performed by a base station, may decrease by a packet delay of the second intermediate data and then gradually increase until another first intermediate data is received.

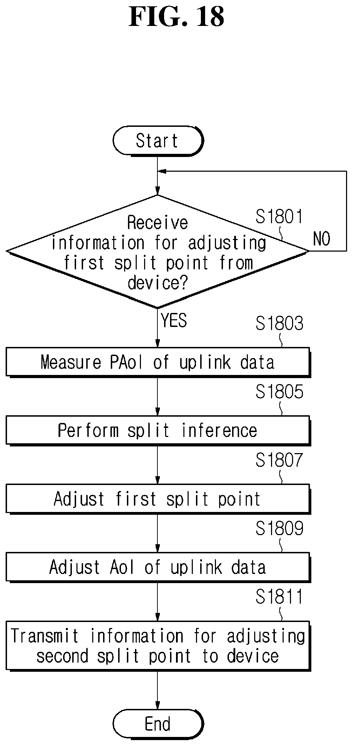

FIG. 18 exemplifies an operation of adjusting a first split point by a base station in a system where a U-shaped split AI/ML model is applied in accordance with an embodiment of the present disclosure. The following steps may be omitted according to a situation and/or configuration and are not limited to specific steps.

Referring to FIG. 18, at step S1801, a base station may receive information for adjusting a first split point from a device. As an example, the first split point may include at least one of a first split point, which is initially configured between the device and the base station, and a first split point that is adjusted in the initially configured first split point. As an example, the information for adjusting the first split point, which the base station receives, may include information on a time where raw data is input into an input layer, location data of a second split point, and first intermediate data that is a result of inference that the device performs for layers from the input layer to the first split point. As an example, when the base station receives no information for adjusting the first split point from the device, split inference has not been performed yet, and thus the base station may perform initial configuration for performing the split inference. An initial configuration may include at least one of initiating increase of AoI and configuring a CoUD metric for calculating an AoI of intermediate data, which is a result of split inference performed by the device and the base station..

At step S 1803, if the base station has received the information for adjusting the first split point from the device, the base station may measure a PAoI of uplink data at a reception time of the information for adjusting the first split point. As an example, the uplink data may include first intermediate data that is an inference result of the device. The measured PAoI value may be a criterion for split point adjustment. Next, at step S1805, the base station may perform split inference for layers from the first split point to the second split point by the first intermediate data received from the device. The base station may generate second intermediate data as a result of split inference. The base station may transmit the generated second intermediate data to the device for performing remaining split inference.

At step S1807, the base station may adjust the first split point. As an example, the base station may adjust the first split point by comparing a measured PAoI value of uplink data and an initially configured threshold value. As an example, when the PAoI value of uplink data is equal to or smaller than the threshold value, the first split point may be moved toward an output layer or be maintained. Herein, the first split point may be moved toward the output layer but only before a second split point. As an example, when the PAoI value of uplink data is greater than the threshold value, the first split point may be moved toward an input layer or be maintained. Herein, the first split point may be moved toward the input layer only after a first hidden layer in order to protect privacy of input data.

At step S1809, the base station may adjust an AoI of uplink data. The base station may compare a time difference between a time ($D_i$) of receiving uplink data from the device and a time ($S_i$) of inputting raw data into the input layer. As an example, the time of inputting the raw data may be a time where split inference starts in the device. Information on the time of inputting the raw data may be delivered from the device to the base station. Next, the base station may drop the AoI as much as a subtraction of $f_s(D_i-S_i)$ from the meausred PAoI value of uplink data. As an example, $\boldsymbol{f_s}$ may be a nondecreasing nonlinear function. $\boldsymbol{f_s}$ may be different according to each device or applied application. Next, the base station may increase the dropped AoI by the PAoI.

At step S1811, the base station may transmit information for adjusting the second split point to the device. As an example, the second split point may include at least one of a first split that is initially configured between the device and the base station after the first split point and a second split point that is adjusted at initial configuration. As an example, information for adjusting the second split point may include at least one of information on a time where the base station receives the first intermediate data, location information of the first split point, and the second intermediate data that is a result of inference performed by the base station for layers from the first split point to the second split point. Herein, since the base station possesses an overall AI/ML model, a size of the first intermediate data, which is a result of split inference performed by the device up to the first split point, may be known. Accordingly, when the base station delivers, to the device, the information on a time of receiving the first intermediate data and the second intermediate data that is a result of inference performed by the base station via downlink, the base station may also deliver location information of the adjusted first split point and a resource that the device may transmit via next uplink.

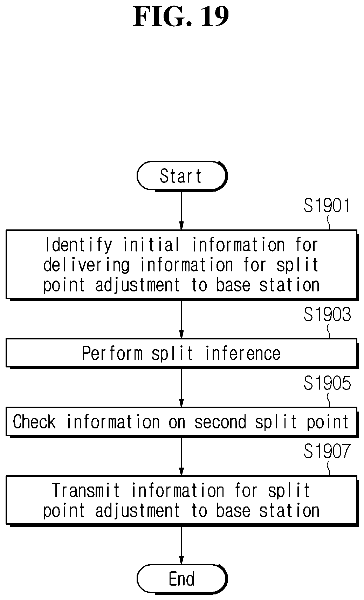

FIG. 19 exemplifies an operation of delivering by a device information for adjusting a split point to a base station in a system where a U-shaped split AI/ML model is applied in accordance with an embodiment of the present disclosure. The following steps may be omitted according to a situation and/or configuration and are not limited to specific steps.

Referring to FIG. 19, at step S 1901, the device may identify initial information for delivering information for split point adjustment to the base station. As an example, the device may check whether or not raw data is input into an input layer. If the raw data is input into the input layer, the device may record an input time. As an example, the device may check whether or not there is information on a first split point received from the base station. If the first split point is not received from the base station, the device may use an initially configured first split point that is not adjusted. If information on the first split point is received from the base station, the device may use a reconfigured first split point reflecting the received information on the first split point. At step S1903, after checking the initial information, the device may perform split inference for layers from an input layer to the first split point. The device may generate first intermediate data as a result of the split inference.

At step S1905, the device may check information on a second split point. As an example, the device may check whether or not there is a calculated second split point. The calculated second split point may be a second split point that the base station adjusts according to an AoI value of downlink data calculated based on a time of receiving information for adjusting the first split point. As an example, if the second split point is calculated, the device may use the calculated second split point, and if not calculated, the device may use an initially configured second split point.

At step S1907, the device may deliver information for split point adjustment in a U-shaped split AI/ML model to the base station. As an example, information for split inference may include at least one of information on a time where raw data is input into the input layer, location data of the second split point, and the first intermediate data that is a result of split inference that the device performs up to the first split point. Next, the device may check whether or not the information for adjusting the split point has been received from the device, and the subsequent procedure may be the same as in FIG. 18.

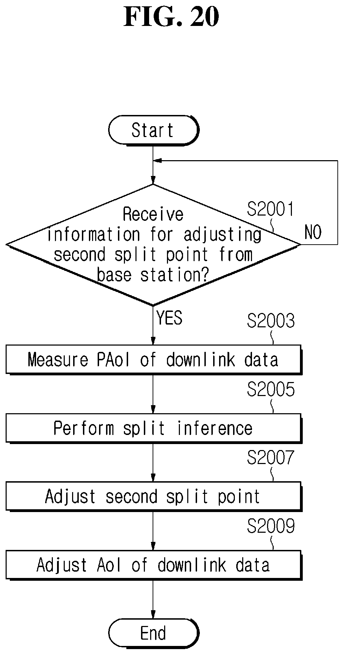

FIG. 20 exemplifies an operation of adjusting a second split point by a device in a system where a U-shaped split AI/ML model is applied in accordance with an embodiment of the present disclosure. The following steps may be omitted according to a situation and/or configuration and are not limited to specific steps.

Referring to FIG. 20, at step S2001, the device may receive information for adjusting a second split point from a base station. As an example, the second split point may include at least one of a second split point, which is initially configured after the first split point between the device and the base station, and a second split point that is adjusted from the initially configured second split point. As an example, the information for adjusting the second split point may include information on a time where the base station receives first intermediate data, location data of the first split point, and second intermediate data that is a result of inference that the base station performs for layers from the first split point to the second split point.

At step S2003, if the device has received the information for adjusting the second split point from the base station, the device may measure a PAoI of downlink data at a reception time of the information for adjusting the second split point. As an example, the downlink data may include second intermediate data that is an inference result of the base station. The measured PAoI value may be a criterion for split point adjustment.

At step S2005, the device may perform split inference for layers from the second split point to the output layer by using the second intermediate data received from the base station. That is, the device may perform split inference for layers from the first split point to the second split point and then perform split inference for remaining layers. The device may generate a label as a result of performing split inference up to the output layer.

At step S2007, the device may adjust the second split point. As an example, the device may adjust the second split point by comparing a measured PAoI value of the downlink data and an initially configured threshold value. As an example, if the PAoI value of the downlink is equal to or smaller than the threshold value, the second split point may be moved toward the output layer or be maintained. Herein, the second split point may be moved toward the output layer but only before the output layer. As an example, when the PAoI value of split inference information is greater than the threshold value, the second split point may be moved toward the input layer or be maintained. Herein, the second split point may be moved toward the input layer only after the first split point.

At step S2009, the device may adjust an AoI of downlink data. The device may compare a time difference between a time ($D_i$) of receiving downlink data from the base station and a time ($S_i$) where the base station receives the first intermediate data from a terminal. Next, the device may drop the AoI as much as a subtraction of $f_s(D_i-S_i)$ from the meausred PAoI value of downlink data. $f_s$ may be different according to each device or applied application. Next, the base station may increase the dropped AoI by the PAoI. Next, the base station may increase the dropped AoI by the PAoI. Next, the base station may increase the dropped AoI by the PAoI.

As described in FIG. 18 and FIG. 20, a split point adjustment operation of a device and a base station may be repeated until the base station notifies the end of a service.

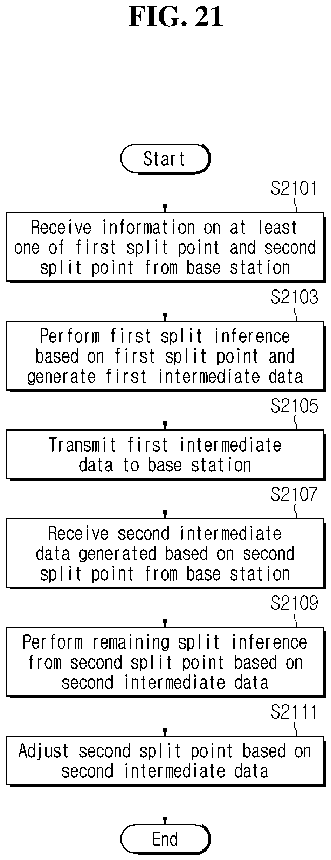

FIG. 21 exemplifies an operation of adjusting a split point by a device in a system where a U-shaped split AI/MI, model is applied in accordance with an embodiment of the present disclosure.

Referring to FIG. 21, at step S2101, the device may receive information on at least one of a first split point and a second split point from a base station. Each of the split points may indicate a point for performing inference through a split AI/ML model. As an example, the first split point and the second split point may be split points that is initially configured by the base station. As an example, at least one of the first split point and the second split point may be a split point that is adjusted from an initially configured split point.

At step S2103, the device may perform first split inference based on the first split point and generate first intermediate data. As an example, the device may perform split inference for layers from an input layer to the first split point based on information on a split point received from the base station. The device may generate the first intermediate data as a result of split inference.

At step S2105, the device may transmit the first intermediate data to the base station. As an example, the device may transmit information on a time where raw data of the device is delivered to the input layer, and information on the second split point, together with the first intermediate data to the base station.

At step S2107, the device may receive second data generated based on the second split point from the base station. As an example, the base station may perform split inference by using the first intermediate data received from the device. As an example, the base station may perform split inference for layers from the first split point to the second split point and generate the second intermediate data as a result of split inference. As an example, the device may receive, from the base station, information on a time where the base station receives the first intermediate data and information on the first split point, together with the second intermediate data.

At step S2109, the device may perform remaining split inference from the second split point based on the second intermediate data received from the base station. As an example, the device may perform split inference for layers from the second split point to the output layer. The device may generate labels as a result of performing split inference. As the device and the base station perform split inference for tripartite layers, privacy for input data and labels may be protected.

At step S2111, the device may adjust the second split point based on the second intermediate data received from the base station. As an example, the device may adjust the second split point by comparing the measured PAoI value of the second intermediate data and a threshold value that the base station initially configures. As an example, if the PAoI value of the second intermediate data is equal to or smaller than the threshold value, the second split point may be moved toward the output layer or be maintained. Herein, the second split point may be moved toward the output layer but only before the output layer. As an example, if the PAoI value of the second intermediate data is greater than the threshold value, the second split point may be moved toward the input layer or be maintained. Herein, second split point may be moved toward the input layer, that is, only after the first split point.

The above steps may be omitted, and in some cases, the order may be changed.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

**Industrial Applicability**

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1. A method of operating a terminal in a wireless communication system, the method comprising:

   receiving information on at least one of a first split point and a second split point from a base station;
   performing first split inference based on the first split point and generating first intermediate data;
   transmitting the first intermediate data to the base station;
   receiving second intermediate data generated based on the second split point from the base station;
   performing remaining split inference from the second split point based on the second intermediate data; and
   adjusting the second split point based on the second intermediate data.

2. The method of claim 1, wherein the first split point indicates a first point where the terminal performs the first split inference based on a U-shaped split artificial intelligence (AI) learning model, and
   wherein the second split point indicates a second point where the base station performs second split inference based on the U-shaped split AI learning model.

3. The method of claim 2, wherein the terminal transmits, to the base station, information on a time when raw data of the terminal is delivered to an input layer and information on the second split point together with the first intermediate data, and
   wherein the terminal receives information on a reception time of the first intermediate data, which the base station receives, and information on the first split point together with the second intermediate data.

4. The method of claim 3, wherein the adjusting of the second split point by the terminal comprises measuring a peak of AoI (PAoI) of the second intermediate data and adjusting the second split point based on a comparison result between a measured PAoI value and a first threshold configured by the base station.

5. The method of claim 4, wherein, in case that the PAoI value is greater than the first threshold, the second split point is moved toward the input layer or be maintained, and in case that the PAoI value is smaller than the first threshold, the second split point is moved toward the output layer or be maintained.

6. The method of claim 5, wherein an adjustment position of the second split point is determined between after the first split point and before the output layer.

7. The method of claim 2, wherein the first split point is moved toward the output layer or is maintained in case that the base station measures a PAoI of the first intermediate data received from the terminal and a value of the measured PAoI of the first intermediate data is smaller than a second threshold configured by the base station, and the first split point is moved toward the input layer or is maintained in case that the value of the measured PAoI of the first intermediate data is greater than the second threshold.

8. The method of claim 7, wherein an adjustment position of the first split point is determined between after the input layer and before the second split point.

9. A method of operating a base station in a wireless communication system, the method comprising:

performing initial configuration for a first split point and a second split point;
transmitting information on at least one of the first split point and the second split point to a terminal;
receiving first intermediate data from the terminal, wherein the first intermediate data is generated based on first split inference that the terminal performs based on the first split point; generating second intermediate data by performing second split inference up to the second split point based on the first intermediate data;
adjusting the first split point based on the first intermediate data; and
transmitting information on the generated second intermediate data and the adjusted first split point to the terminal.

10. A terminal in a wireless communication system comprising:

a transceiver; and
a processor coupled to the transceiver,
wherein the processor is configured to:

receive information on at least one of a first split point and a second split point from a base station,
perform first split inference based on the first split point,
generate first intermediate data,
transmit the first intermediate data to the base station,
receive second intermediate data generated based on the second split point from the base station,
perform remaining split inference from the second split point based on the second intermediate data, and
adjust the second split point based on the second intermediate data.

11. A base station in a wireless communication system comprising:

a transceiver; and
a processor coupled to the transceiver,
wherein the processor is configured to:

perform initial configuration for a first split point and a second split point,
transmit information on at least one of the first split point and the second split point to a terminal,
receive first intermediate data from the terminal, wherein the first intermediate data is generated based on first split inference that the terminal performs based on the first split point, generate second intermediate data by performing second split inference up to the second split point based on the first intermediate data,
adjust the first split point based on the first intermediate data, and
transmit information on the generated second intermediate data and the adjusted first split point to the terminal.

12. An operating method in a wireless communication system, the operating method comprising:

performing, by a base station, initial configuration for a first split point and a second split point;
transmitting, by the base station, information on at least one of the first split point and the second split point to a terminal;
performing, by the terminal, first split inference based on the first split point and generating first intermediate data;

transmitting, by the terminal, at least one of the first intermediate data and information on an adjusted second split point to the base station;

generating, by the bases station, second intermediate data by performing second split inference up to the second split point based on at least one of the first intermediate data and the information on the adjusted second split point which are received from the terminal;

adjusting, by the base station, the first split point based on the first intermediate data received from the terminal;

transmitting, by the base station, the generated second intermediate data and information on the adjusted first split point to the terminal:

performing, by the terminal, remaining split inference from the second split point based on the second intermediate data received from the base station; and

adjusting, by the terminal, the second split point based on the second intermediate data.

13. A communication device comprising:

at least one processor; and

at least one computer memory coupled to the at least one processor and storing instructions instructing operations when executed by the at least one processor,

wherein the operations are configured to:

receive information on at least one of a first split point and a second split point from a base station,

perform first split inference based on the first split point,

generate first intermediate data,

transmit the first intermediate data to the base station,

receive, from the base station, information on second intermediate data generated based on the second split point and the first split point adjusted by the base station,

perform remaining split inference from the second split point based on the second intermediate data, and

adjust the second split point based on the second intermediate data.

14. A non-transitory computer-readable medium storing at least one instruction comprising the at least one instruction executable by a processor,

wherein the at least one instruction instructs a device to:

receive information on at least one of a first split point and a second split point from a base station,

perform first split inference based on the first split point,

generate first intermediate data,

transmit the first intermediate data to the base station,

receive, from the base station, second intermediate data generated based on the second split point,

perform remaining split inference from the second split point based on the second intermediate data, and

adjust the second split point based on the second intermediate data.

# FIG. 1

# FIG. 2

EP 4 270 253 A1

| 202a | 200a | 206a | | 206b | 200b | 202b |
|------|------|------|---|------|------|------|

**First Device**

Processor(s) | Transceiver(s)

Memory(s)

204a

208a | 208b

**Second Device**

Transceiver(s) | Processor(s)

Memory(s)

204b

# FIG. 3

Device(300)

| Communication unit(310)<br>(e.g.,5G Communication unit) | Control unit(320)<br>(e.g.,processor(s)) |
| --- | --- |
| Communication circuit(312)<br>(e.g.,processor(s),Memory(s)) | Memory unit(330)<br>(e.g.,RAM,storage) |
| Transceiver(s)(314)<br>(e.g.,RF unit(s),antenna(s)) | Additional components(340)<br>(e.g.,power unit/battery, I/O unit,<br>driving unit, computing unit) |

# FIG. 4

# FIG. 5

Car or autonomous driving car (500)

| |
|---|
| Communication unit (510) |
| Control unit (520) |
| Memory unit (530) |
| Driving unit (540a) |
| Power supply unit (540b) |
| Sensor unit (540c) |
| Autonomous driving unit (540d) |

550

552

Device (200a,200b)

| |
|---|
| Communication unit (512) |
| Control unit (522) |
| Memory unit (532) |
| Driving unit (540a) |
| Power supply unit (540b) |
| Sensor unit (540c) |
| Autonomous driving unit (540d) |

# FIG. 6

600

620

620 — Communication unit

630 — Memory unit

640a — Input unit

Control unit

640b — Output unit

640c — Learning processor unit

640d — Sensor unit

# FIG. 7A

Cellular IoT connections per region(billion)

Ericsson Mobility Report Nevember 2018

☐ India
☐ South East Asia and Oceania
▨ North East Asia
☐ Western Europe
☐ Central and Eastern Europe
☐ Middle East and Africa
☐ North America
☐ Latin America

# FIG. 7B

# FIG. 8

800

820
Intermediate
data

Gradients/
Labels
830

Client Side
810

Server Side
840

Split point
850

# FIG. 9

Device 910

900

930 Input Data

932 Labels

940 First split point

942 Second split point

920 Base station

# FIG. 10

1010
Edge/Cloud server

1020
Splitting engine

1030
device

1012
NW-side inference
Intermediate data

1022
Split point re-selection decision

Detection of condition changing

Split point re-selection decision

Split point switching

NW-side inference
Intermediate data

1032
Device-side partial inference

1040
Intermediate data

intermediate data uploading

Split point switching

Device-side partial inference

intermediate data uploading

Time

Device inference duration = 12ms (for split point 2 in AlexNet)

intermediate data uploading

Gap for split point switching all device (probably ~ ms)

Device inference duration = 5ms (for split point 1 in AlexNet)

N-th frame (processing period = 33ms for 30FPS)

N+1-th frame (processing period = 33ms for 30FPS)

EP 4 270 253 A1

# FIG. 11

# FIG. 12

# FIG. 13

1300

Mobile device

Network server

Candidate split point 0

Candidate split point 1

Candidate split point 2

Candidate split point 3

Candidate split point 4

Candidate split point 5

Candidate split point 6

☐ Layer latency   ▨ Size of output data

Latency(ms)

Data size(MB)

CNN for image recognition(VGG-16)

input, conv1.1, relu1.1, conv1.2, relu1.2, pool1, conv2.1, relu2.1, conv2.2, relu2.2, pool2, conv3.1, relu3.1, conv3.2, relu3.2, conv3.3, relu3.3, conv3.4, relu3.4, pool3, conv4.1, relu4.1, conv4.2, relu4.2, conv4.3, relu4.3, conv4.4, relu4.4, pool4, conv5.1, relu5.1, conv5.2, relu5.2, conv5.3, relu5.3, conv5.4, relu5.4, pool5, fc6, relu6, drop6, fc7, relu7, drop7, fc8, softmax, argmax

# FIG. 14

**FIG. 15**

# FIG. 16

1620

PAoI

1610

C(t)

$C(t)_{threshold\_base\ station}$

$C_0$

t

②: C(t) belongs to the section
→ Move Split point 1 to the left or maintain

①: C(t) belongs to the section
→ Move Split point 1 to the right or maintain

(a)

- - - → : AoI drop
——→ : Increase after AoI drop

1610

C(t)

threshold

$C_0$

t

(b)

# FIG. 17

1720
PAoI

1710

$C(t)_{threshold\_device}$

$C(t)$

②: C(t) belongs to the section
→ Move Split point 2 to the left or maintain

①: C(t) belongs to the section
→ Move Split point 2 to the right or maintain

$C_0$

t

(a)

- - - → : AoI drop
———→ : Increase after AoI drop

1710

$C(t)$

$C(t)_{threshold\_device}$

$C_0$

(b)

# FIG. 18

```
                    ┌─────────┐
                    │  Start  │
                    └─────────┘
                         │
                         ▼ ◄──────────────┐
                     ╱       ╲            │
                    ╱ Receive  ╲   S1801   │
                   ╱information for╲       │
                  ⟨ adjusting first⟩──NO───┘
                   ╲ split point  ╱
                    ╲from device?╱
                     ╲       ╱
                         │ YES          S1803
                         ▼
              ┌──────────────────────────┐
              │ Measure PAoI of uplink data │
              └──────────────────────────┘
                         │              S1805
                         ▼
              ┌──────────────────────────┐
              │   Perform split inference  │
              └──────────────────────────┘
                         │              S1807
                         ▼
              ┌──────────────────────────┐
              │    Adjust first split point │
              └──────────────────────────┘
                         │              S1809
                         ▼
              ┌──────────────────────────┐
              │  Adjust AoI of uplink data  │
              └──────────────────────────┘
                         │              S1811
                         ▼
              ┌──────────────────────────┐
              │ Transmit information for adjusting │
              │  second split point to device  │
              └──────────────────────────┘
                         │
                         ▼
                    ┌─────────┐
                    │   End   │
                    └─────────┘
```

# FIG. 19

```
                    ┌─────────────┐
                    │    Start    │
                    └──────┬──────┘
                           │                    S1901
          ┌────────────────▼─────────────────┐
          │  Identify initial information for │
          │  delivering information for split │
          │  point adjustment to base station │
          └────────────────┬─────────────────┘
                           │                    S1903
          ┌────────────────▼─────────────────┐
          │      Perform split inference      │
          └────────────────┬─────────────────┘
                           │                    S1905
          ┌────────────────▼─────────────────┐
          │ Check information on second split point │
          └────────────────┬─────────────────┘
                           │                    S1907
          ┌────────────────▼─────────────────┐
          │    Transmit information for split │
          │   point adjustment to base station│
          └────────────────┬─────────────────┘
                           │
                    ┌──────▼──────┐
                    │     End     │
                    └─────────────┘
```

# FIG. 20

Start

S2001

Receive information for adjusting second split point from base station?

NO

YES

S2003

Measure PAoI of downlink data

S2005

Perform split inference

S2007

Adjust second split point

S2009

Adjust AoI of downlink data

End

# FIG. 21

Start

S2101

Receive information on at least
one of first split point and second
split point from base station

S2103

Perform first split inference
based on first split point and
generate first intermediate data

S2105

Transmit first intermediate
data to base station

S2107

Receive second intermediate
data generated based on second
split point from base station

S2109

Perform remaining split inference
from second split point based on
second intermediate data

S2111

Adjust second split point based on
second intermediate data

End

## INTERNATIONAL SEARCH REPORT

| International application No. |
| --- |
| **PCT/KR2021/017979** |

**A. CLASSIFICATION OF SUBJECT MATTER**

**G06N 3/08**(2006.01)i; **G06N 3/04**(2006.01)i; **G06N 5/04**(2006.01)i; **G06N 5/02**(2006.01)i; **H04W 72/04**(2009.01)i

According to International Patent Classification (IPC) or to both national classification and IPC

**B. FIELDS SEARCHED**

Minimum documentation searched (classification system followed by classification symbols)

G06N 3/08(2006.01); G06N 3/04(2006.01); G06N 5/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 스플릿 포인트(split point), 스플릿 인퍼런스(split inference), 중간 데이터 (intermediate data), AoI(age of information), U자형(U-shape), 조정(adjustment), 다운링크(downlink)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2020-0113744 A (ELECTRONICS AND TELECOMMUNICATIONS RESEARCH INSTITUTE) 07 October 2020 (2020-10-07) See paragraphs [0001], [0034]-[0036] and [0047]; and claims 1-2. | 1-3,9-14 |
| A | | 4-8 |
| Y | US 2020-0175361 A1 (ALIBABA GROUP HOLDING LIMITED) 04 June 2020 (2020-06-04) See paragraphs [0027] and [0036]. | 1-3,9-14 |
| A | 3GPP; TSG SA; Study on traffic characteristics and performance requirements for AI/ML model transfer in 5GS (Release 18). 3GPP TR 22.874 V0.1.0. 06 October 2020. See section 5.1. | 1-14 |
| A | YANG, Kai et al. Energy-Efficient Processing and Robust Wireless Cooperative Transmission for Edge Inference. IEEE Internet of Things Journal. Volume: 7, Issue: 10, pp. 9456-9470, 10 March 2020. See sections I-III. | 1-14 |

[✓] Further documents are listed in the continuation of Box C.     [✓] See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 March 2022** | **02 March 2022** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
|---|
| **PCT/KR2021/017979** |

**C.    DOCUMENTS CONSIDERED TO BE RELEVANT**

| Category* | Citation of document, with indication, where appropriate, of the relevant passages | Relevant to claim No. |
|---|---|---|
| A | ZHOU, Zhi et al. Edge Intelligence: Paving the Last Mile of Artificial Intelligence With Edge Computing. Proceedings of the IEEE. Volume: 107, Issue: 8, pp. 1738-1762, 12 June 2019. See sections II-V. | 1-14 |

INTERNATIONAL SEARCH REPORT
Information on patent family members

International application No.

**PCT/KR2021/017979**

| Patent document cited in search report | | | Publication date (day/month/year) | Patent family member(s) | | | Publication date (day/month/year) |
|---|---|---|---|---|---|---|---|
| KR | 10-2020-0113744 | A | 07 October 2020 | US | 2020-0311546 | A1 | 01 October 2020 |
| US | 2020-0175361 | A1 | 04 June 2020 | CN | 113169990 | A | 23 July 2021 |
| | | | | TW | 202036393 | A | 01 October 2020 |
| | | | | WO | 2020-108371 | A1 | 04 June 2020 |